(19) Europäisches Patentamt

European Patent Office

Office européen des brevets

(11) **EP 4 700 844 A1**

(12) **EUROPEAN PATENT APPLICATION**

(43) Date of publication:
**25.02.2026 Bulletin 2026/09**

(21) Application number: **25196960.6**

(22) Date of filing: **20.08.2025**

(51) International Patent Classification (IPC):
*H01M 4/131* (2010.01)     *H01M 4/36* (2006.01)
*H01M 4/38* (2006.01)     *H01M 4/48* (2010.01)
*H01M 4/485* (2010.01)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.08.2024 US 202463685811 P
03.06.2025 TW 114120768**

(71) Applicant: **Largan Precision Co. Ltd.
Taichung City 408 (TW)**

(72) Inventors:
• **Chen, Wei-Yuan
408 Taichung City (TW)**

• **Chen, Po-Tsun
408 Taichung City (TW)**
• **Huang, Shih Yu
408 Taichung City (TW)**
• **Tsai, Ying Chia
408 Taichung City (TW)**
• **Tsai, Cheng-Yu
408 Taichung City (TW)**
• **Teng, Chun-Hung
408 Taichung City (TW)**

(74) Representative: **Lippert Stachow Patentanwälte
Rechtsanwälte
Partnerschaft mbB
Frankenforster Strasse 135-137
51427 Bergisch Gladbach (DE)**

(54) **ANODE COMPOSITION, ANODE AND BATTERY**

(57) An anode composition includes a component particle and a dispersed particle, and the component particle and the dispersed particle are respectively an active material. The component particle includes a lithium-titanium complex oxide, and the lithium-titanium complex oxide includes a lithium element and a titanium element. The dispersed particle includes a structural element complex oxide, the structural element complex oxide includes a structural element, and the structural element includes a tin and is selected at least two from a group consisting of a magnesium, an aluminum, a silicon, a calcium, a chromium, a manganese, an iron, a cobalt, a nickel, a copper, a zinc, a gallium and a germanium.

Fig. 3A

EP 4 700 844 A1

## Description

## BACKGROUND

Technical Field

The present disclosure relates to an anode composition, an anode and a battery. More particularly, the present disclosure relates to a composition, an anode and a battery which can improve the safety, the cycle life, the stability and the electrical capacity of the battery.

Description of Related Art

The current goals of research and development of batteries are to achieve the demands of high energy density, high working voltage, fast charging speed and long cycle life. The commonly used materials for anodes are carbon or graphite nowadays. However, in the cycle process of high current, the carbon or graphite, which mostly has a layered structure, cannot withstand the rapid intercalation and deintercalation of ions. Therefore, it is prone to cause an irreversible collapse of the structure, resulting in reducing the electrical capacity and the storage life. Further, when the current density is too high, it is also prone to cause the polarization, which makes the lithium ion be reduced to the lithium metal and form the lithium dendrites on the surface of the electrode pieces, resulting in short circuit in the battery and the safety concerns.

Further, the theoretical energy density of the graphite is far lower than the requirement of kinetic energy of large electric devices, such as electric cars. Therefore, the silicon material with high energy density is introduced to be a new anode material, and it has become a trend in the development of the lithium batteries in the future. However, it is shown in the studies that when a battery including the silicon material undergoes several charge-discharge cycles, the volume of the anode will extremely change and the material will even crack because the lithium ions are repeatedly intercalated and moved out from the silicon materials. Thus, the structural stability of the anode is seriously affected, resulting in a significant loss of battery life.

## SUMMARY

According to one aspect of the present disclosure, an anode composition includes a component particle and a dispersed particle, and the component particle and the dispersed particle are respectively an active material. The component particle includes a lithium-titanium complex oxide, and the lithium-titanium complex oxide includes a lithium element and a titanium element. The dispersed particle includes a structural element complex oxide, the structural element complex oxide includes a structural element, and the structural element includes a tin and is selected at least two from a group consisting of a magnesium, an aluminum, a silicon, a calcium, a chromium, a manganese, an iron, a cobalt, a nickel, a copper, a zinc, a gallium and a germanium. When a weight ratio of the component particle in the anode composition is pWlt, and a weight ratio of the dispersed particle in the anode composition is pWd, the following condition can be satisfied: $0.10 \leq pWd/pWlt \leq 3.00$.

According to the anode composition of the foregoing aspect, wherein the weight ratio of the component particle in the anode composition is pWlt, the weight ratio of the dispersed particle in the anode composition is pWd, and the following condition is satisfied: $0.30 \leq pWd/pWlt \leq 1.50$.

According to the anode composition of the foregoing aspect, wherein the weight ratio of the component particle in the anode composition is pWlt, the weight ratio of the dispersed particle in the anode composition is pWd, and the following condition is satisfied: $0.35 \leq pWd/pWlt \leq 0.50$.

According to the anode composition of the foregoing aspect, wherein the structural element includes the tin and are selected at least two from a group consisting of the aluminum, the silicon, the chromium, the manganese, the iron, the cobalt, the nickel and the copper.

According to the anode composition of the foregoing aspect, wherein the structural element includes the tin, the iron and is selected at least one from a group consisting of the aluminum, the silicon, the chromium, the manganese, the cobalt, the nickel and the copper.

According to the anode composition of the foregoing aspect, wherein the anode composition includes at least two oxidation peaks or at least two reduction peaks in a voltage range of 0.10 V to 4.00 V.

According to the anode composition of the foregoing aspect, wherein an average of an observed particle size of the component particle is aSDlt, an average of an observed particle size of the dispersed particle is aSDd, and the following condition is satisfied: $0.10 \leq 10 \times aSDd/aSDlt \leq 1.50$.

According to another aspect of the present disclosure, an anode includes an anode material including the anode composition according to the aforementioned aspect and a conductive agent.

According to the anode of the foregoing aspect, wherein a weight ratio of the anode composition in the anode material is pWo, a weight ratio of the conductive agent in the anode material is pWc, and the following condition is satisfied: $2.80 \le pWo/pWc \le 3.80$.

According to the anode of the foregoing aspect, wherein the anode material includes at least two oxidation peaks or at least two reduction peaks in a voltage range of 0.20 V to 2.50 V.

According to the anode of the foregoing aspect, wherein the anode material includes at least two reduction peaks in a voltage range of 0.50 V to 1.80 V.

According to the anode of the foregoing aspect, wherein the at least two oxidation peaks in the anode material include a first oxidation peak, and a voltage of the first oxidation peak is Vo1, and the following condition is satisfied: $1.40 \text{ V} \le Vo1 \le 2.00 \text{ V}$.

According to the anode of the foregoing aspect, wherein the anode material includes a first oxidation peak and a first reduction peak in a voltage range of 0.20 V to 2.50 V, a voltage of the first oxidation peak is Vo1, a voltage of the first reduction peak is Vr1, and the following condition is satisfied: $0.05 \text{ V} \le |Vo1-Vr1| \le 1.50 \text{ V}$.

According to the anode of the foregoing aspect, wherein the at least two oxidation peaks in the anode material include a first oxidation peak and a second oxidation peak, a voltage of the first oxidation peak is Vo1, a voltage of the second oxidation peak is Vo2, and the following condition is satisfied: $0.05 \text{ V} \le |Vo1-Vo2| \le 0.60 \text{ V}$.

According to the anode of the foregoing aspect, wherein a density of the anode material is DSan, and the following condition is satisfied: $0.50 \text{ g/cm}^3 \le DSan \le 1.80 \text{ g/cm}^3$.

According to the anode of the foregoing aspect, wherein a thickness of the anode material is THan, an electric resistance of the anode material is Ran, and the following conditions are satisfied: $1.0 \, \mu m \le THan \le 70.0 \, \mu m$; and $0.30 \text{ m}\Omega \le Ran \le 10.00 \text{ m}\Omega$.

According to further another aspect of the present disclosure, a battery includes the anode according to the aforementioned aspect.

According to the battery of the foregoing aspect, wherein a discharge volumetric capacity of a tenth cycle of the battery with a current of 1 C for charging and discharging is C1V10, a discharge volumetric capacity of a one-hundredth cycle of the battery with the current of 1 C for charging and discharging is C1V100, and the following condition is satisfied: $0.50 \le C1V100/C1V10 \le 1.80$.

According to the battery of the foregoing aspect, wherein a discharge volumetric capacity of a tenth cycle of the battery with a current of 1 C for charging and discharging is C1V10, a discharge volumetric capacity of a four-hundredth cycle of the battery with the current of 1 C for charging and discharging is C1V400, and the following condition is satisfied: $0.85 \le C1V400/C1V10 \le 2.00$.

According to the battery of the foregoing aspect, wherein a discharge volumetric capacity of a tenth cycle of the battery with a current of 1 C for charging and discharging is C1V10, a discharge volumetric capacity of an eight-hundredth cycle of the battery with the current of 1 C for charging and discharging is C1V800, and the following condition is satisfied: $0.70 \le C1V800/C1V10 \le 2.50$.

According to still another aspect of the present disclosure, an anode composition includes a component particle and a dispersed particle, and the component particle and the dispersed particle are respectively an active material. The component particle includes a lithium-titanium complex oxide, and the lithium-titanium complex oxide includes a lithium element and a titanium element. The dispersed particle includes a structural element complex oxide, and the structural element complex oxide includes a structural element. The structural element includes a tin and is selected at least two from a group consisting of a magnesium, an aluminum, a silicon, a calcium, a chromium, a manganese, an iron, a cobalt, a nickel, a copper, a zinc, a gallium and a germanium. When an observed particle size of the component particle is SDlt, the following condition is satisfied: $0.50 \, \mu m \le SDlt \le 50.00 \, \mu m$.

According to the anode composition of the foregoing aspect, wherein the structural element includes a tin and is selected at least two from a group consisting of an aluminum, a silicon, a chromium, a manganese, an iron, a cobalt, a nickel and a copper.

According to the anode composition of the foregoing aspect, wherein the observed particle size of the component particle is SDlt, an observed particle size of the dispersed particle is SDd, and the following conditions are satisfied: $1.00 \, \mu m \le SDlt \le 30.00 \, \mu m$; and $0.01 \, \mu m \le SDd \le 5.00 \, \mu m$.

According to the anode composition of the foregoing aspect, wherein an average of the observed particle size of the component particle is aSDlt, an average of the observed particle size of the dispersed particle is aSDd, and the following conditions is satisfied: $0.30 \le 10 \times aSDd/aSDlt \le 1.20$.

According to yet another aspect of the present disclosure, an anode includes an anode material including the anode composition according to the aforementioned aspect.

According to the anode of the foregoing aspect, wherein the anode material includes at least two oxidation peaks in a voltage range of 1.30 V to 2.50 V, and the anode material includes at least two reduction peaks in a voltage range of 0.50 V to 1.80 V.

According to the anode of the foregoing aspect, wherein the at least two oxidation peaks of the anode material include a first oxidation peak and a second oxidation peak, a voltage of the first oxidation peak is Vo1, a voltage of the second oxidation peak is Vo2, and the following conditions is satisfied: 0.05 V ≤ |Vo1-Vo2| ≤ 0.60 V.

According to the anode of the foregoing aspect, wherein the at least two reduction peaks of the anode material include a first reduction peak and a second reduction peak, a voltage of the first reduction peak is Vr1, a voltage of the second reduction peak is Vr2, and the following conditions is satisfied: 0.20 V ≤ |Vr1-Vr2| ≤ 1.00 V.

According to the anode of the foregoing aspect, wherein the at least two reduction peaks of the anode material include a first reduction peak and a second reduction peak, a peak value of the first reduction peak is Ir1, a peak value of the second reduction peak is Ir2, and the following conditions is satisfied: $-1.50 \leq (Ir1-Ir2)/(Ir1+Ir2) \leq 1.50$.

According to more another aspect of the present disclosure, a battery includes the anode according to the aforementioned aspect.

## BRIEF DESCRIPTION OF THE DRAWINGS

The present disclosure can be more fully understood by reading the following detailed description of the embodiment, with reference made to the accompanying drawings as follows:

Fig. 1 is a scanning electron microscopy image of a surface of a component particle of a battery according to Comparative example 1.

Fig. 2 is a discharge cycle diagram with a current of 1 C of a battery according to Comparative example 2.

Fig. 3A is a scanning electron microscopy image of a surface of a component particle of a battery according to Example 1.

Fig. 3B is a scanning electron microscopy image of a surface of a dispersed particle of the battery according to Example 1.

Fig. 3C is a diagram of charging and discharging voltage-electric quantity differential curve with a constant current of the battery according to Example 1.

Fig. 3D is a diagram of cubic differential curve of the battery during charging according to Example 1.

Fig. 3E is a diagram of cubic differential curve of the battery during discharging according to Example 1.

Fig. 3F is a discharge cycle diagram with a current of 1 C of the battery according to Example 1.

Fig. 4 is a discharge cycle diagram with a current of 1 C of the battery according to Example 2.

Fig. 5 is a discharge cycle diagram with a current of 1 C of the battery according to Example 3.

Fig. 6 is a discharge cycle diagram with a current of 1 C of the battery according to Example 4.

Fig. 7 is a discharge cycle diagram with a current of 1 C of the battery according to Example 5.

Fig. 8 is a discharge cycle diagram with a current of 1 C of the battery according to Example 6.

Fig. 9 is a discharge cycle diagram with a current of 1 C of the battery according to Example 7.

Fig. 10 is a discharge cycle diagram with a current of 1 C of the battery according to Example 8.

Fig. 11 is a discharge cycle diagram with a current of 1 C of the battery according to Example 9.

## DETAILED DESCRIPTION

According to one embodiment of the present disclosure, an anode composition includes a component particle and a dispersed particle, and the component particle and the dispersed particle are respectively an active material. The component particle includes a lithium-titanium complex oxide, and the lithium-titanium complex oxide includes a lithium element and a titanium element. The dispersed particle includes a structural element complex oxide, the structural element complex oxide includes a structural element, and the structural element includes a tin and is selected at least two from a group consisting of a magnesium, an aluminum, a silicon, a calcium, a chromium, a manganese, an iron, a cobalt, a nickel, a copper, a zinc, a gallium and a germanium. Therefore, the composition of the present disclosure is formed by the lithium-titanium complex oxide and the structural element complex oxide and applied in the anode material, and by the arrangement that the structural element complex oxides are evenly distributed around the lithium-titanium complex oxide, it is not only favorable for simplifying the manufacturing process thereof, but also favorable for maintaining the structure stability of the anode composition and enhancing the energy density. Therefore, by the arrangement of the lithium-titanium complex oxide and the structural element complex oxide are mixed with a proper proportion, it is favorable for enhancing the charging efficiency and the energy density of the battery. Further, it is favorable for enhancing the safety and increasing the service life of the battery in the high temperature environment by the arrangement that the anode composition is an oxide with a high heat resistance. Furthermore, the change of the crystal volume of the anode composition is small and the mechanical stability thereof is high during the oxidation-reduction reaction, so that it is favorable for adapting the larger current density and maintaining the overall structural integrity so as to avoid the problem of poor battery cycle life caused by the structural damage. Moreover, the more uniform solid electrolyte interface membrane can be formed during the charging and discharging process by the various oxides of the anode composition having similar oxidation-reduction potentials, so that it is favorable for reducing the problem caused by lithium ion consumption of the electrical capacity reduction and the overall impedance increase of the battery, and also favorable for avoiding the formation of lithium dendrites can be avoided so as to enhance the use safety of the battery. Therefore, compared to the single-element oxide, the anode composition includes a variety of elements having similar oxidation-reduction potentials. Because the multi-element complex oxide has the application advantages of a higher richness of the oxidation-reduction reaction, a higher electrochemical activity, a higher conductivity, etc., the electrochemical performance of the materials can be improved.

According to the anode composition of the present disclosure, when a weight ratio of the component particle in the anode composition is pWlt, and a weight ratio of the dispersed particle in the anode composition is pWd, the following can be satisfied: $0.10 \leq pWd/pWlt \leq 3.00$. Therefore, by the arrangement that the component particle and the dispersed particle are mixed with a proper proportion, it is favorable for enhancing the charging efficiency and the energy density of the battery. Furthermore, the following condition can be satisfied: $0.30 \leq pWd/pWlt \leq 1.50$. Furthermore, the following condition can be satisfied: $0.35 \leq pWd/pWlt \leq 0.50$. Furthermore, the following condition can be satisfied: $0.15 \leq pWd/pWlt \leq 2.50$. Furthermore, the following condition can be satisfied: $0.20 \leq pWd/pWlt \leq 2.00$. Furthermore, the following condition can be satisfied: $0.35 \leq pWd/pWlt \leq 1.40$. Furthermore, the following condition can be satisfied: $0.38 \leq pWd/pWlt \leq 1.30$. Furthermore, the following condition can be satisfied: $0.40 \leq pWd/pWlt \leq 1.20$.

According to the anode composition of the present disclosure, when an observed particle size of the component particle is SDlt, the following condition can be satisfied: $0.50 \ \mu m \leq SDlt \leq 50.00 \ \mu m$. Therefore, maintaining the appropriate particle size of the lithium-titanium complex oxide not only helps maintaining of the overall structural integrity, and the defects or easy breakage of the lithium-titanium complex oxide can be avoided, but also it is favorable for enhancing the electrical capacity retention and an excellent cycle life. Furthermore, the following condition can be satisfied: $1.00 \ \mu m \leq SDlt \leq 30.00 \ \mu m$. Furthermore, the following condition can be satisfied: $0.75 \ \mu m \leq SDlt \leq 40.00 \ \mu m$. Furthermore, the following condition can be satisfied: $2.00 \ \mu m \leq SDlt \leq 25.00 \ \mu m$. Furthermore, the following condition can be satisfied: $3.00 \ \mu m \leq SDlt \leq 20.00 \ \mu m$. Furthermore, the following condition can be satisfied: $4.00 \ \mu m \leq SDlt \leq 15.00 \ \mu m$. Furthermore, the following condition can be satisfied: $4.50 \ \mu m \leq SDlt \leq 12.00 \ \mu m$.

According to the anode composition of the present disclosure, when an observed particle size of the dispersed particle is SDd, the following condition can be satisfied: $0.01 \ \mu m \leq SDd \leq 5.00 \ \mu m$. Therefore, by the arrangement that the appropriate particle size of the dispersed particle satisfies a proper size, it is not only favorable for increasing the dispersibility of the dispersed particle, but also enhancing the energy density. Furthermore, the following condition can be satisfied: $0.05 \ \mu m \leq SDd \leq 3.00 \ \mu m$. Furthermore, the following condition can be satisfied: $0.10 \ \mu m \leq SDd \leq 2.00 \ \mu m$. Furthermore, the following condition can be satisfied: $0.15 \ \mu m \leq SDd \leq 1.00 \ \mu m$. Furthermore, the following condition can be satisfied: $0.20 \ \mu m \leq SDd \leq 0.80 \ \mu m$. Furthermore, the following condition can be satisfied: $0.22 \ \mu m \leq SDd \leq 0.75 \ \mu m$.

According to the anode composition of the present disclosure, the structural element includes the tin and can be selected at least two from a group consisting of the aluminum, the silicon, the chromium, the manganese, the iron, the cobalt, the nickel and the copper. Therefore, by the arrangement that structural element complex oxide is composed of at least three of the specific elements, compared to the single-element oxide, the composition of the multi-element oxide has more various oxidation-reduction reactions and a higher electrochemical activity.

According to the anode composition of the present disclosure, the structural element includes the tin, the iron and can be selected at least one from a group consisting of the aluminum, the silicon, the chromium, the manganese, the cobalt, the nickel and the copper. Therefore, by the arrangement that the specific three-element complex oxide is used as one of the material of the anode composition, a bigger current density can be adapted and the overall structural integrity can be maintained, and it is favorable for increasing the cycle life of the battery.

According to the anode composition of the present disclosure, the anode composition can include at least two oxidation peaks or at least two reduction peaks in a voltage range of 0.10 V to 4.00 V. Therefore, by the arrangement that the anode composition includes the oxidation peaks or the reduction peaks in the specific voltage range, the oxidation-reduction reaction can have a higher richness, and it is favorable for enhancing the electrochemical performance of the materials.

According to the anode composition of the present disclosure, when an average of the observed particle size of the component particle is aSDlt, and an average of the observed particle size of the dispersed particle is aSDd, the following condition can be satisfied: $0.10 \leq 10 \times aSDd/aSDlt \leq 1.50$. Therefore, by the arrangement of a proper size ratio between the size of the component particle and the size of the dispersed particle, it is favorable for the dispersed particle to be more evenly dispersed, and favorable for expanding the contacting area between the dispersed particle and the component particle. Furthermore, the following condition can be satisfied: $0.20 \leq 10 \times aSDd/aSDlt \leq 1.50$. Furthermore, the following condition can be satisfied: $0.30 \leq 10 \times aSDd/aSDlt \leq 1.20$. Furthermore, the following condition can be satisfied: $0.40 \leq 10 \times aSDd/aSDlt \leq 1.00$. Furthermore, the following condition can be satisfied: $0.45 \leq 10 \times aSDd/aSDlt \leq 0.95$. Furthermore, the following condition can be satisfied: $0.50 \leq 10 \times aSDd/aSDlt \leq 0.85$.

According to further another embodiment of the present disclosure, an anode includes an anode material. The anode material includes the anode composition according to the aforementioned aspect and a conductive agent.

According to the anode of the present disclosure, when a weight ratio of the anode composition in the anode material is pWo, and a weight ratio of the conductive agent in the anode material is pWc, the following condition can be satisfied: $2.80 \leq pWo/pWc \leq 3.80$. Therefore, by the arrangement that a proper ratio between the anode composition and the conductive agent is satisfied, it is favorable for maintaining the balance between the energy density and the enhancement of the conductivity. Furthermore, the following condition can be satisfied: $2.90 \leq pWo/pWc \leq 3.70$. Furthermore, the following condition can be satisfied: $3.00 \leq pWo/pWc \leq 3.60$. Furthermore, the following condition can be satisfied: $3.10 \leq pWo/pWc \leq 3.50$. Furthermore, the following condition can be satisfied: $3.15 \leq pWo/pWc \leq 3.40$. Furthermore, the following condition can be satisfied: $3.20 \leq pWo/pWc \leq 3.30$.

According to the anode of the present disclosure, the anode material can include at least two oxidation peaks or at least two reduction peaks in a voltage range of 0.20 V to 2.50 V. Therefore, by the arrangement of the anode material with the oxidation peaks or the reduction peaks in the specific voltage range, the oxidation-reduction reaction can have a higher richness, and it is favorable for enhancing the electrochemical performance of the materials.

According to the anode of the present disclosure, the anode material can include at least two reduction peaks in a voltage range of 0.50 V to 1.80 V. Therefore, by analyzing the plural reduction peaks of the anode material in the discharging process, a higher electrochemical activity can be provided, and it is favorable for enhancing the electrical capacity in the discharging.

According to the anode of the present disclosure, the anode material can include at least two oxidation peaks in a voltage range of 1.30 V to 2.50 V, and the anode material can include at least two reduction peaks in a voltage range of 0.50 V to 1.80 V. Therefore, by analyzing the plural oxidation peaks of the anode material in the charging process and the plural reduction peaks of the anode material in the discharging process, a higher electrochemical activity can be provided, and it is favorable for enhancing the electrical capacity retention.

According to the anode of the present disclosure, the anode material includes at least two oxidation peaks including a first oxidation peak, when a voltage of the first oxidation peak is Vo1, the following condition can be satisfied: $1.40 V \leq Vo1 \leq 2.00 V$. Therefore, by analyzing the voltage of the first oxidation peak of the anode material, it is favorable for analyzing the elements that perform the best oxidation reaction and the transformation of the valence states thereof during the oxidation process, and thus the setting of the optimal charging working interval can be facilitated. Furthermore, the following condition can be satisfied: $1.45 V \leq Vo1 \leq 1.90 V$. Furthermore, the following condition can be satisfied: $1.50 V \leq Vo1 \leq 1.85 V$. Furthermore, the following condition can be satisfied: $1.55 V \leq Vo1 \leq 1.80 V$. Furthermore, the following condition can be satisfied: $1.58 V \leq Vo1 \leq 1.78 V$. Furthermore, the following condition can be satisfied: $1.60 V \leq Vo1 \leq 1.75 V$.

According to the anode of the present disclosure, the at least two oxidation peaks of the anode material include a second oxidation peak, when a voltage of the second oxidation peak is Vo2, the following condition can be satisfied: $1.50 V \leq Vo2 \leq 2.50 V$. Therefore, by analyzing the voltage of the second oxidation peak of the anode material, it is favorable for understanding the electrochemical reactions of the anode material and the optimization of the design in the battery can be affected. Furthermore, the following condition can be satisfied: $1.60 V \leq Vo2 \leq 2.40 V$. Furthermore, the following condition can be satisfied: $1.70 V \leq Vo2 \leq 2.30 V$. Furthermore, the following condition can be satisfied: $1.75 V \leq Vo2 \leq 2.20 V$. Furthermore, the following condition can be satisfied: $1.80 V \leq Vo2 \leq 2.10 V$.

According to the anode of the present disclosure, the at least two reduction peaks in the anode material include a first reduction peak, when a voltage of the first reduction peak is Vr1, the following condition can be satisfied: $0.50 V \leq Vr1 \leq 2.00 V$. Therefore, by analyzing the voltage of the first reduction peak of the anode material, it is favorable for elevating the performance of the battery including the reduction efficiency during the discharging and the energy density during the discharging. Furthermore, the following condition can be satisfied: $0.60 V \leq Vr1 \leq 1.80 V$. Furthermore, the following condition can be satisfied: $0.70 V \leq Vr1 \leq 1.70 V$. Furthermore, the following condition can be satisfied: $0.80 V \leq Vr1 \leq 1.60 V$. Furthermore, the following condition can be satisfied: $0.85 V \leq Vr1 \leq 1.55 V$.

According to the anode of the present disclosure, the at least two reduction peaks in the anode material include a second reduction peak, when a voltage of the second reduction peak is Vr2, the following condition can be satisfied: $0.50 \text{ V} \leq \text{Vr2} \leq 2.00 \text{ V}$. Therefore, by analyzing the voltage of the second reduction peak of the anode material, the reduction efficiency of the multi-element oxides can be evaluated, it is favorable for enhancing the energy density during the discharging and the cyclic stability. Furthermore, the following condition can be satisfied: $0.60 \text{ V} \leq \text{Vr2} \leq 1.80 \text{ V}$. Furthermore, the following condition can be satisfied: $0.70 \text{ V} \leq \text{Vr2} \leq 1.70 \text{ V}$. Furthermore, the following condition can be satisfied: $0.80 \text{ V} \leq \text{Vr2} \leq 1.60 \text{ V}$. Furthermore, the following condition can be satisfied: $0.85 \text{ V} \leq \text{Vr2} \leq 1.55 \text{ V}$.

According to the anode of the present disclosure, the anode material can include a first oxidation peak and a first reduction peak in a voltage range of 0.20 V to 2.50 V, when a voltage of the first oxidation peak is Vo1 and a voltage of the first reduction peak is Vr1, the following condition can be satisfied: $0.05 \text{ V} \leq |\text{Vo1-Vr1}| \leq 1.50 \text{ V}$. Therefore, by reducing the difference between the voltage of the first oxidation peak and the voltage of the first reduction peak of the anode material, it is favorable for increasing the reversibility of the electrochemical oxidation-reduction reaction. Furthermore, the following condition can be satisfied: $0.06 \text{ V} \leq |\text{Vo1-Vr1}| \leq 1.30 \text{ V}$. Furthermore, the following condition can be satisfied: $0.07 \text{ V} \leq |\text{Vo1-Vr1}| \leq 1.20 \text{ V}$. Furthermore, the following condition can be satisfied: $0.08 \text{ V} \leq |\text{Vo1-Vr1}| \leq 1.10 \text{ V}$. Furthermore, the following condition can be satisfied: $0.09 \text{ V} \leq |\text{Vo1-Vr1}| \leq 1.00 \text{ V}$. Furthermore, the following condition can be satisfied: $0.10 \text{ V} \leq |\text{Vo1-Vr1}| \leq 0.90 \text{ V}$.

According to the anode of the present disclosure, when the voltage of the first oxidation peak of the anode material is Vo1, and the voltage of the second oxidation peak of the anode material is Vo2, the following condition can be satisfied: $0.05 \text{ V} \leq |\text{Vo1-Vo2}| \leq 0.60 \text{ V}$. Therefore, by the arrangement that the voltage of the two oxidation peaks have similar voltages, and it is favorable for reducing the problem of the increase of the impedance of the battery after multiple charges and discharges. Furthermore, the following condition can be satisfied: $0.06 \text{ V} \leq |\text{Vo1-Vo2}| \leq 0.55 \text{ V}$. Furthermore, the following condition can be satisfied: $0.07 \text{ V} \leq |\text{Vo1-Vo2}| \leq 0.50 \text{ V}$. Furthermore, the following condition can be satisfied: $0.08 \text{ V} \leq |\text{Vo1-Vo2}| \leq 0.48 \text{ V}$. Furthermore, the following condition can be satisfied: $0.09 \text{ V} \leq |\text{Vo1-Vo2}| \leq 0.45 \text{ V}$. Furthermore, the following condition can be satisfied: $0.10 \text{ V} \leq |\text{Vo1-Vo2}| \leq 0.42 \text{ V}$.

According to the anode of the present disclosure, when the voltage of the first reduction peak of the anode material is Vr1, and the voltage of the second reduction peak of the anode material is Vr2, the following condition can be satisfied: $0.20 \text{ V} \leq |\text{Vr1-Vr2}| \leq 1.00 \text{ V}$. Therefore, by the arrangement that the voltage of the two reduction peaks have similar voltages, and it is favorable for forming a more uniform SEI membrane and extending the service life of the battery. Furthermore, the following condition can be satisfied: $0.25 \text{ V} \leq |\text{Vr1-Vr2}| \leq 0.90 \text{ V}$. Furthermore, the following condition can be satisfied: $0.30 \text{ V} \leq |\text{Vr1-Vr2}| \leq 0.85 \text{ V}$. Furthermore, the following condition can be satisfied: $0.35 \text{ V} \leq |\text{Vr1-Vr2}| \leq 0.80 \text{ V}$. Furthermore, the following condition can be satisfied: $0.40 \text{ V} \leq |\text{Vr1-Vr2}| \leq 0.75 \text{ V}$. Furthermore, the following condition can be satisfied: $0.45 \text{ V} \leq |\text{Vr1-Vr2}| \leq 0.70 \text{ V}$.

According to the anode of the present disclosure, when a peak value of the first reduction peak of the anode material is Ir1, and a peak value of the second reduction peak of the anode material is Ir2, the following condition can be satisfied: $-1.50 \leq (\text{Ir1-Ir2})/(\text{Ir1+Ir2}) \leq 1.50$. Therefore, by the arrangement that the two reduction peaks have similar peak values, the equivalent oxidation-reduction efficiency thereof during the charging and discharging process can be provided, and it is favorable for reducing the recession rate of the battery. Furthermore, the following condition can be satisfied: $-1.00 \leq (\text{Ir1-Ir2})/(\text{Ir1+Ir2}) \leq 1.20$. Furthermore, the following condition can be satisfied: $-0.80 \leq (\text{Ir1-Ir2})/(\text{Ir1+Ir2}) \leq 1.00$. Furthermore, the following condition can be satisfied: $-0.50 \leq (\text{Ir1-Ir2})/(\text{Ir1+Ir2}) \leq 0.90$. Furthermore, the following condition can be satisfied: $-0.40 \leq (\text{Ir1-Ir2})/(\text{Ir1+Ir2}) \leq 0.80$. Furthermore, the following condition can be satisfied: $-0.30 \leq (\text{Ir1-Ir2})/(\text{Ir1+Ir2}) \leq 0.75$.

According to the anode of the present disclosure, when a density of the anode material is DSan, the following condition can be satisfied: $0.50 \text{ g/cm}^3 \leq \text{DSan} \leq 1.80 \text{ g/cm}^3$. Therefore, by the arrangement that the anode material has a proper density, it is favorable for enhancing the energy density of the battery. Furthermore, the following condition can be satisfied: $0.60 \text{ g/cm}^3 \leq \text{DSan} \leq 1.60 \text{ g/cm}^3$. Furthermore, the following condition can be satisfied: $0.65 \text{ g/cm}^3 \leq \text{DSan} \leq 1.50 \text{ g/cm}^3$. Furthermore, the following condition can be satisfied: $0.70 \text{ g/cm}^3 \leq \text{DSan} \leq 1.40 \text{ g/cm}^3$. Furthermore, the following condition can be satisfied: $0.75 \text{ g/cm}^3 \leq \text{DSan} \leq 1.30 \text{ g/cm}^3$. Furthermore, the following condition can be satisfied: $0.78 \text{ g/cm}^3 \leq \text{DSan} \leq 1.25 \text{ g/cm}^3$.

According to the anode of the present disclosure, when a thickness of the anode material is THan, and an electric resistance of the anode material is Ran, the following conditions can be satisfied: $1.0 \ \mu\text{m} \leq \text{THan} \leq 70.0 \ \mu\text{m}$; and $0.30 \text{ m}\Omega \leq \text{Ran} \leq 10.00 \text{ m}\Omega$. Therefore, under the conditions that the thickness of the anode material is maintained within a proper range and the electric resistance satisfies a proper range, it is favorable for maintaining the cycling stability of the battery. Furthermore, the following conditions can be satisfied: $3.0 \ \mu\text{m} \leq \text{THan} \leq 60.0 \ \mu\text{m}$; and $0.50 \text{ m}\Omega \leq \text{Ran} \leq 8.00 \text{ m}\Omega$. Furthermore, the following conditions can be satisfied: $5.0 \ \mu\text{m} \leq \text{THan} \leq 50.0 \ \mu\text{m}$; and $0.80 \text{ m}\Omega \leq \text{Ran} \leq 6.00 \text{ m}\Omega$. Furthermore, the following conditions can be satisfied: $8.0 \ \mu\text{m} \leq \text{THan} \leq 40.0 \ \mu\text{m}$; and $1.00 \text{ m}\Omega \leq \text{Ran} \leq 4.00 \text{ m}\Omega$. Furthermore, the following conditions can be satisfied: $10.0 \ \mu\text{m} \leq \text{THan} \leq 30.0 \ \mu\text{m}$; and $1.10 \text{ m}\Omega \leq \text{Ran} \leq 3.00 \text{ m}\Omega$. Furthermore, the following conditions can be satisfied: $12.0 \ \mu\text{m} \leq \text{THan} \leq 20.0 \ \mu\text{m}$; and $1.20 \text{ m}\Omega \leq \text{Ran} \leq 2.50 \text{ m}\Omega$.

According to still another embodiment of the present disclosure, a battery includes the anode according to the aforementioned aspect.

According to the battery of the present disclosure, when a discharge volumetric capacity of a tenth cycle of the battery with a current of 1 C for charging and discharging is C1V10, and a discharge volumetric capacity of a one-hundredth cycle of the battery with the current of 1 C for charging and discharging is C1V100, the following condition can be satisfied: $0.50 \leq$ C1V100/C1V10 $\leq 1.80$. Therefore, by comparing the difference of the capacities of the tenth cycle and the short-term cycles of the battery, it is favorable for reducing the recession rate of the battery. Furthermore, the following condition can be satisfied: $0.60 \leq$ C1V100/C1V10 $\leq 1.60$. Furthermore, the following condition can be satisfied: $0.70 \leq$ C1V100/C1V10 $\leq 1.50$. Furthermore, the following condition can be satisfied: $0.80 \leq$ C1V100/C1V10 $\leq 1.40$. Furthermore, the following condition can be satisfied: $0.90 \leq$ C1V100/C1V10 $\leq 1.30$. Furthermore, the following condition can be satisfied: $1.00 \leq$ C1V100/C1V10 $\leq 1.25$.

According to the battery of the present disclosure, when the discharge volumetric capacity of the tenth cycle of the battery with the current of 1 C for charging and discharging is C1V10, and a discharge volumetric capacity of a four-hundredth cycle of the battery with the current of 1 C for charging and discharging is C1V400, the following condition can be satisfied: $0.85 \leq$ C1V400/C1V10 $\leq 2.00$. Therefore, by comparing the difference of the capacities of the tenth cycle and the medium-term cycles of the battery, it is favorable for enhancing the durability of the battery. Furthermore, the following condition can be satisfied: $0.87 \leq$ C1V400/C1V10 $\leq 1.80$. Furthermore, the following condition can be satisfied: $0.88 \leq$ C1V400/C1V10 $\leq 1.60$. Furthermore, the following condition can be satisfied: $0.89 \leq$ C1V400/C1V10 $\leq 1.50$. Furthermore, the following condition can be satisfied: $0.90 \leq$ C1V400/C1V10 $\leq 1.40$. Furthermore, the following condition can be satisfied: $0.92 \leq$ C1V400/C1V10 $\leq 1.35$.

According to the battery of the present disclosure, when the discharge volumetric capacity of the tenth cycle of the battery with the current of 1 C is C1V10, and a discharge volumetric capacity of an eight-hundredth cycle of the battery with the current of 1 C for charging and discharging is C1V800, the following condition can be satisfied: $0.70 \leq$ C1V800/C1V10 $\leq 2.50$. Therefore, by comparing the difference of the capacities of the tenth cycle and the long-term cycles of the battery, it is favorable for strengthening the battery life. Furthermore, the following condition can be satisfied: $0.75 \leq$ C1V800/C1V10 $\leq 2.30$. Furthermore, the following condition can be satisfied: $0.80 \leq$ C1V800/C1V10 $\leq 2.10$. Furthermore, the following condition can be satisfied: $0.85 \leq$ C1V800/C1V10 $\leq 2.00$. Furthermore, the following condition can be satisfied: $0.90 \leq$ C1V800/C1V10 $\leq 1.90$. Furthermore, the following condition can be satisfied: $0.95 \leq$ C1V800/C1V10 $\leq 1.80$.

In the anode composition of the present disclosure, the surface of the component particle can include a porous structure, and the dispersed particle can be located in the porous structure on the surface of the component particle. The forming method of the anode composition is to add the component particle and the dispersed particle to a solution so as to form a colloidal solution. By the property that the size of the component particle is significantly larger than the size of the dispersed particle, the dispersed particle can be tightly distributed around the peripheral area of the component particle so as to form the anode composition. Further, an adhesive also can be added to the colloidal solution, and it is favorable for increasing the coverage of the dispersed particle distributed around the component particle. Furthermore, it also can be achieved by adjusting the electrolyte added to the solution or changing the pH value of the solution, etc., to change the electric property and the electric quantity of the component particle or the dispersed particle, and thus the component particle and the dispersed particle with different electric properties can attract each other in the solution.

The component particle of the present disclosure can include a niobium-titanium complex oxide, a lithium-titanium complex oxide or a niobium-vanadium complex oxide.

The dispersed particle of the present disclosure can be a mixed material, and the mixed material can include a structural element oxide, a tin-based alloy, a modified silicon material, a carbon material, a lithium-containing metal compound, a lithium-containing metal oxide, a metallic lithium, or a combination thereof, wherein the structural element oxide can include a structural element complex oxide and a structural element mixed oxide, and the modified silicon material can include a silicon material and an auxiliary material.

The active material of the present disclosure can refer that the active material participates in the oxidation-reduction reaction within the working voltage range of the battery. The differential capacity analysis (DCA) of the charging and discharging voltage with a constant current and the electric quantity can be used to determine whether the material is an active material or not. If the object is the active material, it includes an oxidation peak or a reduction peak within the working voltage range.

The niobium-titanium complex oxide of the present disclosure can include a non-doped niobium-titanium complex oxide and a doped niobium-titanium complex oxide. A constitution of the non-doped niobium-titanium complex oxide includes at least a niobium element, a titanium element and an oxygen element. The niobium-titanium complex oxide includes a plurality of compounds, which can be further represented by the following chemical formula:

$$Ti_xNb_yO_z;$$

wherein $z \leq 4x+5y$, such as, $TiNb_2O_7$, $Ti_2Nb_{10}O_{29}$, $TiNb_{14}O_{37}$ and $TiNb_{24}O_{62}$. A crystal structure of the niobium-titanium complex oxide can be a cubic crystal system, a monoclinic crystal system, an orthorhombic crystal system, a $ReO_3$-type lattice, a layered structure, etc. The doped niobium-titanium complex oxide can be selected at least one compound from the aforementioned non-doped niobium-titanium complex oxides, the at least one compound is doped with at least one doped element, and the doped niobium-titanium complex oxide can be further represented by the following chemical formula:

$$Ti_{(x-a)}M1_aNb_{(y-b)}M2_bO_{(z-c)}M3_c;$$

wherein M1, M2 and M3 are the doped elements, $0 \leq a < x$, $0 \leq b < y$, and $0 \leq c < z$. The change of the structure can be achieved by adjusting the element doped therein or the ratio of the doped ratio. Further, at least one of the auxiliary materials can be further selected to cover or fill a surface or pores of the niobium-titanium complex oxide.

The lithium-titanium complex oxide of the present disclosure can include a non-doped lithium-titanium complex oxide and a doped lithium-titanium complex oxide. The composition of the non-doped lithium-titanium complex oxide includes at least a lithium element, a titanium element and an oxygen element. The lithium-titanium complex oxide includes a plurality of compounds, such as $Li_4Ti_5O_{12}$, $LiTi_2O_4$, $Li_2Ti_3O_7$ and $Li_2TiO_3$. The doped lithium-titanium complex oxide can be selected at least one compound from the aforementioned non-doped lithium-titanium complex oxides, and the at least one compound is doped with at least one doped element. The change of the structure can be achieved by adjusting the element doped therein or the ratio of the doped ratio. Further, at least one of the auxiliary materials can be further selected to cover or fill a surface or pores of the lithium-titanium complex oxide.

The doped element of the present disclosure can be any element selected from Group IA, Group IIA, Group IVB, Group VB, Group VIB, Group VIIB, Group VIIIB, Group IB, Group IIB, Group IIIA, Group IVA, Group VA, Group VIA and Group VIIA. Further, it can be further selected from at least one of lithium, boron, fluorine, sodium, magnesium, aluminum, silicon, phosphorus, sulfur, chlorine, calcium, vanadium, chromium, manganese, iron, cobalt, nickel, copper, zinc, gallium, arsenic, bromine, zirconium, molybdenum, antimony, iodine, tantalum, tungsten and bismuth. By selecting the element with a high conductive property or the lighter element to be doped, it is favorable for enhancing the conductive property of the doped niobium-titanium complex oxide and the doped lithium-titanium complex oxide, so that the fast charging performance of the battery can be strengthened, and the energy density can be increased.

The structural element of the present disclosure can be a metallic element or a metalloid element. The metallic element can be any element selected from Group IA, Group IIA, Group IVB, Group VB, Group VIB, Group VIIB, Group VIIIB, Group IB, Group IIB, Group IIIA and Group IVA. The metallic element can be further selected from magnesium, aluminum, silicon, calcium, titanium, vanadium, chromium, manganese, iron, cobalt, nickel, copper, zinc, gallium, germanium, niobium and tin. The metalloid element can include boron, silicon, germanium, arsenic, antimony and tellurium, and the metalloid element can be further selected from boron, silicon, germanium.

The structural element complex oxide of the present disclosure can include a compound formed by at least two kinds of the structural element, such as a lithium-titanium complex oxide, a niobium-titanium complex oxide, a cobalt-copper complex oxide, a cobalt-tin complex oxide, a cobalt-silicon complex oxide, a cobalt-iron complex oxide, a cobalt-manganese complex oxide, a cobalt-nickel complex oxide, a copper-tin complex oxide, a copper-silicon complex oxide, a copper-iron complex oxide, a copper-manganese complex oxide, a copper-nickel complex oxide, a tin-silicon complex oxide, a tin-iron complex oxide, a tin-manganese complex oxide, a tin-nickel complex oxide, a silicon-iron complex oxide, a silicon-manganese complex oxide, a silicon-nickel complex oxide, an iron-manganese complex oxide, an iron-nickel complex oxide, and a manganese-nickel complex oxide. In particular, the structural element complex oxide can include a compound formed by at least three kinds of the aforementioned structural element. The structural element can be further selected at least three from a group consisting of the magnesium, the aluminum, the silicon, the calcium, the titanium, the vanadium, the chromium, the manganese, the iron, the cobalt, the nickel, the copper, the zinc, the gallium, the germanium, the niobium and the tin. The structural element can further include the tin and can be selected at least two from a group consisting of the magnesium, the aluminum, the silicon, the calcium, the chromium, the manganese, the iron, the cobalt, the nickel, the copper, the zinc, the gallium and the germanium. The structural element can further include tin and can be selected at least two from a group consisting of the aluminum, the silicon, the chromium, the manganese, the iron, the cobalt, the nickel and the copper. The structural element can further included the tin, the iron and can be selected at least one from a group consisting of the aluminum, the silicon, the chromium, the manganese, the cobalt, the nickel and the copper. The structural element complex oxide include but is not limited to a tin-cobalt-copper complex oxide, a tin-nickel-copper complex oxide, a tin-manganese-cobalt complex oxide, a tin-manganese-nickel complex oxide, a tin-cobalt-copper complex oxide, a tin-iron-aluminum complex oxide, a tin-iron-silicon complex oxide, a tin-iron-chromium complex oxide, a tin-iron-manganese complex oxide, a tin-iron-cobalt complex oxide, a tin-iron-nickel complex oxide.

The structural element mixed oxide of the present disclosure can include the structural element. In particular, the structural element mixed oxide can be a mixture formed by at least two oxides including the structural element, such as the mixture formed by the tin oxide and the nickel oxide, the mixture formed by the tin oxide and the titanium oxide, the mixture formed by the tin oxide and the cobalt oxide, the mixture formed by the tin oxide and the manganese oxide, the mixture formed by the silicon oxide and the lithium oxide, the mixture formed by the silicon oxide and the titanium oxide, the mixture formed by the silicon oxide and the tin oxide, the mixture formed by the silicon oxide and the iron oxide. In particular, the structural element mixed oxide can be a mixture formed by at least three oxides including the structural element, such as the mixture formed by the tin oxide, the iron oxide and the aluminum oxide, the mixture formed by the tin oxide, the iron oxide and the silicon oxide, the mixture formed by the tin oxide, the iron oxide and the chromium oxide, the mixture formed by the tin oxide, the iron oxide and the manganese oxide, the mixture formed by the tin oxide, the iron oxide and the cobalt oxide, the mixture formed by the tin oxide, the iron oxide and the nickel oxide, the mixture formed by the tin oxide, the iron oxide and the copper oxide, the mixture formed by the tin oxide, the copper oxide and the cobalt oxide, the mixture formed by the tin oxide, the manganese oxide and the nickel oxide, the mixture formed by the tin oxide, the copper oxide and the nickel oxide, the mixture formed by the silicon oxide, the chromium oxide and the manganese oxide, the mixture formed by the silicon oxide, the copper oxide and the manganese oxide.

The tin-based alloy of the present disclosure can include a tin-phosphorus alloy, a tin-sulfur alloy, a tin-antimony alloy, a tin-cobalt sulfur alloy, a tin-antimony sulfur alloy, and a tin-copper phosphorus alloy.

The modified silicon material of the present disclosure can include the silicon material and the auxiliary material, wherein the silicon material and the auxiliary material can form a mixture, the silicon material and the auxiliary material can also form chemical bonds there between, and the silicon material and the auxiliary material can also form a layered structure. Further, the auxiliary material can be selected to a polymer. The polymer can form the layered structure around the peripheral area of the silicon material by a chemical bonding method or a physical mixing method, wherein the polymer is polymerized from the at least two monomers, the at least two monomers can include a first monomer and a second monomer, the first monomer includes a siloxane group, and the second monomer includes a carboxyl group or an ester group. The first monomer is closer to the silicon material than the second monomer. The polymer can be formed by the covalent bonding of the addition polymerization and copolymerization of the first monomer including an unsaturated alkenyl group or an acrylate group and the second monomer including an unsaturated alkenyl group or an unsaturated acrylate group, wherein a crosslinking agent can be further added to the polymer, so that the polymer being a linear form can be bound and crosslinked to each other so as to a crosslinking structure.

The silicon material of the present disclosure can be a silicon, a silicon oxide, a silicon-carbon composite or a silicon alloy. The size of the silicon material at D50 is sD50, and the following condition can be satisfied: $10.0 \text{ nm} \leq \text{sD50} \leq 10000.0 \text{ nm}$. Further, the following conditions can be satisfied: $10.0 \text{ nm} \leq \text{sD50} \leq 3000.0 \text{ nm}$; $10.0 \text{ nm} \leq \text{sD50} \leq 2000.0 \text{ nm}$; $10.0 \text{ nm} \leq \text{sD50} \leq 1000.0 \text{ nm}$; $10.0 \text{ nm} \leq \text{sD50} \leq 500.0 \text{ nm}$; $20.0 \text{ nm} \leq \text{sD50} \leq 400.0 \text{ nm}$; $30.0 \text{ nm} \leq \text{sD50} \leq 300.0 \text{ nm}$; $40.0 \text{ nm} \leq \text{sD50} \leq 250.0 \text{ nm}$; $50.0 \text{ nm} \leq \text{sD50} \leq 200.0 \text{ nm}$; $60.0 \text{ nm} \leq \text{sD50} \leq 150.0 \text{ nm}$; or $70.0 \text{ nm} \leq \text{sD50} \leq 100.0 \text{ nm}$. Further, sD50 can be 20 nm, 50 nm, 80 nm, 100 nm, 150 nm, 200 nm, 250 nm, 300 nm, 350 nm, 400 nm, 450 nm, 500 nm, 800 nm, 1000 nm, 1500 nm, 2000 nm, 2500 nm or 3000 nm.

The carbon active material of the present disclosure can be graphite, graphene, carbon microbeads, hard carbon or soft carbon.

The first monomer of the present disclosure can be a siloxy compound including at least one of alkenyl group (-C=C-), carbonyl group (-C=O), carboxyl group (-COOH), amide group ($-CONH_2$) or silyl enol ether, and the first monomer can include ethenyl(trimethoxy)silane, ethenyl(triethoxy)silane, ethenyl-dimethoxy-methylsilane, 2-(chloromethyl) prop-2-enyl-trimethoxysilane, [2-hydroxy-3-[3- [methyl-bis(trimethylsilyloxy)silyl]propoxy]propyl] 2-methylprop-2-enoate, 3-[dimethyl(trimethylsilyloxy)silyl]propyl 2-methylprop-2-enoate, 3-[methyl-bis(trimethylsilyloxy)silyl]propyl 2-methylprop-2-enoate, N-prop-2-enyl-3-trimethoxysilylpropan-1-amine, (3-isocyanatopropyl)-triethoxysilane, 1-[3-(trimethoxysilyl)propyl]urea, vinylmethylsiloxane-dimethylsiloxane silanol terminated copolymer. Further, the siloxy compound can further be but not limited to the following structure:

$$(R)_3\text{-Si-}(CH_2)_n\text{-X-}(CH_2)_m\text{-A};$$

wherein R is selected from a group consisting of methoxy group, ethoxy group and siloxy group, X is methyl group or oxygen, A is selected from a group consisting of ethenyl group, acrylate group and methacrylate group, and n and m satisfy the following condition: $0 \leq n+m \leq 10$. The siloxy compound can include triethoxysilylmethyl 2-methylprop-2-enoate, 2-Trimethylsilyloxyethyl 2-methylprop-2-enoate, 3-trimethoxysilylpropyl 2-methylprop-2-enoate (MPS), 4-trimethoxysilylbutyl 2-methylprop-2-enoate, 5-trimethoxysilylpentyl 2-methylprop-2-enoate, 6-trimethoxysilylhexyl 2-methylprop-2-enoate, 7-trimethoxysilylheptyl 2-methylprop-2-enoate, 8-trimethoxysilyloctyl 2-methylprop-2-enoate, 9-trimethoxysilylnonyl 2-methylprop-2-enoate, 10-trimethoxysilyldecyl 2-methylprop-2-enoate, tris(trimethylsilyloxy) silylmethyl 2-methylprop-2-enoate, 3-tris(trimethylsilyloxy)silylpropyl 2-methylprop-2-enoate. The siloxy compound can be processed by the hydrolysis reaction to include a silanol group (Si-OH) with activity and then performed by a condensation reaction with the silicon material (especially forming the silicon oxide on the surface by the oxidant) so as to form a siloxane with the structure of Si-O-Si. The Si-H bond on the surface of the silicon material can be oxidized into a silanol group (Si-OH), or the silicon can be oxidized into a silicon dioxide by the oxidant, and thus it is favorable for forming an oxidizing layer on the surface of the silicon material.

The second monomer of the present disclosure can include a carboxyl group or an ester group, such as 2-(dimethylamino)ethyl 2-methylprop-2-enoate (DMAEMA), methyl 2-methylprop-2-enoate (MMA), methyl prop-2-enoate (MA), 2-ethylhexyl prop-2-enoate (2EHA), prop-2-enoic acid (AA), 2-methylpropyl 2-methylprop-2-enoate (IBMA), benzyl 2-methylprop-2-enoate (BZMA), oxolan-2-ylmethyl prop-2-enoate (THFA), 2-(2-ethoxyethoxy)ethyl prop-2-enoate (EDGA), dodecyl prop-2-enoate (LA), or a composition of the aforementioned monomers.

The crosslinking agent of the present disclosure can be used to bind and crosslink the polymer being a linear form to each other so as to a crosslinking structure. The crosslinking agent can be any of the terminally ethylenically unsaturated compound, which can include: 2,2',2'',2'''-(ethane-1,2-diyldinitrilo)tetraacetic acid (EDTA), ethoxylated-9 trimethylolpropane triacrylate (TMP9EOTA), 2-(2-methylprop-2-enoyloxy)ethyl 2-methylprop-2-enoate, 2-[2-(2-methylprop-2-enoyloxy)ethoxy]ethyl 2-methylprop-2-enoate, 2-[2-[2-(2-methylprop-2-enoyloxy)ethoxy]ethoxy]ethyl 2-methylprop-2-enoate, 2-[2-[2-[2-(2-Methylprop-2-enoyloxy)ethoxy]ethoxy]ethoxy]ethyl 2-methylprop-2-enoate, prop-2-enyl 2-methylprop-2-enoate, 3-(2-methylprop-2-enoyloxy)propyl 2-methylprop-2-enoate, [2-methyl-3-(2-methylprop-2-enoyloxy) propyl] 2-methylprop-2-enoate, 4-(2-methylprop-2-enoyloxy)butyl 2-methylprop-2-enoate, and 6-(2-methylprop-2-enoyloxy) hexyl 2-methylprop-2-enoate.

The silicon-carbon composite of the present disclosure can include a layered structure of silicon surrounded by a carbon shell, a silicon-carbon yolk-shell structure and a porous structure. The layered structure of silicon surrounded by the carbon shell is formed by the pyrolysis in the absence of oxygen so as to cover the carbon shell on the peripheral area of the silicon material. The silicon-carbon yolk-shell structure is formed by generating a silicon oxide on the surface of the silicon and then a layer of carbon shell covers on the peripheral area of the silicon material by the pyrolysis in the absence of oxygen. Then, the silicon oxide is removed by the hydrofluoric acid (HF) to make the silicon particles break into tiny nanoparticles. The porous structure is manufactured by the materials with low self-diffusion coefficients or adding foaming materials and then processed by sintering or electrochemical corrosion, so that the intermediate product is carbonized to form a silicon carbide ceramic porous material.

The carbon material of the present disclosure can be formed by carbonizing the carbon-containing precursor by the heat treatment. The carbon-containing precursor can include organic compounds, and the organic compounds can further include carbohydrates, asphalts or an organic polymer.

The carbon conductive material of the present disclosure can be graphite, carbon microbeads, carbon fibers, hard carbon, soft carbon, conductive graphite (KS6, SFG6), graphene, acetylene black, Ketjenblack, carbon black (Super P), or carbon nanotube (CNT).

The anode material of the present disclosure can include the anode composition and the auxiliary material.

The auxiliary material of the present disclosure can include polymers, metals, alloys, non-metal oxides, metal oxides, fluorides, organic compounds, adhesives, conductive agent or additives.

The adhesive of the present disclosure can be poly(1,1-difluoroethylene) (PVDF), styrene-butadiene rubber (SBR), poly(methylene) (PE), poly(ethenol) (PVA), poly(1-ethenylpyrrolidin-2-one) (PVP), poly(1-methylethylene) (PP), poly(1-acrylonitrile) (PAN), carboxymethyl cellulose (CMC), poly(1,1,2,2-tetrafluoroethylene) (PTFE), ethylene propylene diene monomer (EPDM), hypalon polyethlene pubber (CSM), or alginic acid made of the mono alduronic acid by linear polymerization.

The conductive agent of the present disclosure can be graphite, conductive graphite, graphene, acetylene black, ketjenblack, carbon black, carbon nanotube, carbon microbeads, carbon fibers, hard carbon, soft carbon, aluminium powder, nickel powder, titanium dioxide, potassium hexatitanate (PHT), or a combination thereof.

The anode piece of the present disclosure can be manufactured by the methods of coating on single layer or double layers, vacuum coating or composite structures.

The cathode material of the present disclosure can be a lithium complex metal oxide including lithium or at least one metal, such as $LiFePO_4$, $LiMnO_2$, $LiMn_2O_4$, $LiCoO_2$, $LiNiO_2$, $LiNiCoO_2$, $LiNiMnO_4$, $LiCoMnO_2$, $LiCoMnO_4$, $LiNiCoMnO_3$, $LiNiCoMnO_4$, or a combination thereof. The aforementioned lithium complex metal oxide can have various oxidation states.

The electrolyte of the present disclosure can be composed of metal salts, additives and organic solvents. The composition ratio of the organic solvent is larger than the composition ratio of the additive, and the electrolyte can be liquid, colloidal or solid. The additive and the organic solvent of the electrolyte can be mixed physically, or at least one of the following additives and the organic solvent monomers can be selected as a precursor for polymerization.

The metal salt of the present disclosure can include the inorganic acid lithium salt such as $LiPF_6$, $LiBF_4$, $LiSbF_6$, $LiAsF_6$, $LiClO_4$, $LiC_4BO_8$, LiTFSI, LiFSI, $LiNO_3$, $LiGaCl_4$; the lithium sulfonate including fluorine such as $LiCF_3SO_3$, $LiN(C_2F_5SO_2)_2$, $LiN(CF_3SO_2)_2$, $LiC(CF_3SO_2)_3$; and $LiBF_2(C_2O_4)$ (LiDFOB), $LiB(C_2O_4)_2$ (LiBOB), or a combination thereof. The aforementioned metal salts can have various oxidation states.

The organic solvent of the present disclosure can be carbonate esters, carboxylate esters, ethers, sulfides or the combination thereof. The aforementioned organic solvents can also be used as the additives.

The additive of the present disclosure can be carbonate ester compounds, lactone cyclic esters, cyclic compounds including ether groups, aromatic compounds, phosphorus compounds, boron compounds, inorganic oxides, or a combination thereof. With a proper adding amount of the additive, it is favorable for enhancing the efficacy of the battery. For example, improving the composition of the SEI membrane, increasing the efficacy under high temperature and high voltage, enhancing the transmission ability of the ions, reducing the impedance of the electrolyte, increasing the stability of cycles, the integrity of the materials of the anode and the cathode, enhancing the electrochemical stability, etc.

The organic solvent of the present disclosure has a structure including polymerizable olefin groups, which can be used as the monomer of the second structural precursor. For example, it can be 2H-1,3-dioxol-2-one (vinylene carbonate; VC), 4-vinyl-1,3-dioxolan-2-one (vinylethylene carbonate; VEC), 1,3-dithiole-2-thione (vinylene trithiocarbonate), 2,5-dihydrothiophene-1,1-dioxide, 1-ethenylsulfonylethene, prop-1-ene-1,3-sultone, cyclic additives including ether groups, or additives of aromatic compounds.

The carbonate ester organic solvent of the present disclosure can be a compound in which some or all of the hydrogens of the hydroxyl group in the carbonic acid are substituted by an alkyl group, and the carbonate ester organic solvent can be divided to cyclic carbonate esters and linear carbonate esters. The linear carbonate ester can include dimethyl carbonate (DMC), diethyl carbonate (DEC), dipropyl carbonate (DPC), ethyl methyl carbonate (EMC), methyl propyl carbonate (MPC), ethyl propyl carbonate (EPC), and methyl 2,2,2-trifluoroethyl carbonate (FEMC). The cyclic carbonate ester can include 1,3-dioxolan-2-one (ethylene carbonate; EC), 4-methyl-1,3-dioxolan-2-one (propylene carbonate; PC), 1,3-dioxan-2-one (trimethylene carbonate; TMC), 4-ethyl-1,3-dioxolan-2-one (1,2-butylene carbonate), (4R,5S)-4,5-dimethyl-1,3-dioxolan-2-one (cis-2,3-butylene carbonate), 1,2-pentylene carbonate, 2,3-pentylene carbonate, 2H-1,3-dioxol-2-one (vinylene carbonate; VC), 4-vinyl-1,3-dioxolan-2-one (vinylethylene carbonate; VEC), 4-fluoro-1,3-dioxolan-2-one (fluoroethylene carbonate; FEC), trans-4,5-difluoro-1,3-dioxolan-2-one (difluoroethylene carbonate; DFEC), 1,3-dithiole-2-thione (vinylene trithiocarbonate), or a combination thereof.

The carboxylate organic solvent of the present disclosure can be manufactured by the esterification reaction of alcohols and carboxyl acids, and the carboxylate organic solvent can be methyl acetate, ethyl acetate, propyl acetate, methyl propionate, ethyl propionate, propyl propionate, methyl butyrate, ethyl butyrate, lactone, or a combination thereof. The lactone can further include the structure of 1-oxacycloalkan-2-one, wherein the lactone is obtained from a compound including a hydroxyl group and a carboxylic acid, and the compound is condensed within the molecule so as to form a cyclic carboxylate monomer. According to the position of the hydroxyl group forming the ring and the number of carbon atoms in the ring, there can be many combinations, such as oxiran-2-one ($\alpha$-acetolactone), oxetan-2-one ($\beta$-propiolactone), oxolan-2-one ($\gamma$-butyrolactone), 5-methyloxolan-2-one ($\gamma$-valerolactone), oxan-2-on ($\sigma$-valerolactone), 5-ethyloxolan-2-one ($\gamma$-caprolactone), oxepan-2-one ($\epsilon$-caprolactone), D-glucono-1,5-lactone ($\delta$-gluconolactone), or a combination thereof.

The ether organic solvent of the present disclosure can be oxolane (THF), 2-methyloxolane (2-MeTHF), 1,3-dioxolane (DOL), 4-methyl-1,3-dioxolane (4-MeDOL), dimethoxymethane (DMM), 1,2-dimethoxyethane (DME), 2,2-dimethoxypropane (DMP), 1,2-bis(2-cyanoethoxy)ethane (DENE), 1-methoxy-2-(2-methoxyethoxy)ethane (DG),or a combination thereof.

The sulfide organic solvent of the present disclosure can be divided into compounds including sulfone group (-(O=)S(=O)-) or compounds including sulfonate group (-$SO_2O^-$). The compounds including sulfone group can include 2,5-dihydrothiophene-1,1-dioxide and 1-ethenylsulfonylethene. The compounds including sulfonate group can be further divided into mesylate ($CH_3SO_2O^-$), trifluoromethanesulfonate ($CF_3SO_2O^-$), p-toluenesulfonyl group (Tosyl), 1-methylsulfonyloxyethane, methyl 4-methylbenzenesulfonate, oxathiolane 2,2-dione, prop-1-ene-1,3-sultone, 1,3,2-dioxathiane 2,2-dioxide, or a combination thereof.

The lactone cyclic ester additive of the present disclosure can be a polycyclic diester monomer obtained by the esterification condensation of two identical or two different compounds including the hydroxy acid, and the lactone cyclic ester additive can include 1,4-dioxane-2,5-dione (glycolide), 3,6-dimethyl-1,4-dioxane-2,5-dione (lactide), or a combination thereof. Further, according to the stereoisomers formed based on differences in the spatial arrangement of atoms, the lactide can be further divided to (R,R)-3,6-dimethyl-1,4-dioxane-2,5-dione (LL-lactide), (S,S)-3,6-dimethyl-1,4-dioxane-2,5-dione (DD-lactide), (meso)-3,6-dimethyl-1,4-dioxane-2,5-dione (DL-lactide). Further, the lactide also can be formed by the carboxylic acid compounds including hydroxyl groups, wherein the carboxylic acid compounds can be directly copolymerized to form polymers without ring-opening reaction, and the lactide can include 2-hydroxyacetic acid (glycolic acid), 3-hydroxypropanoic acid (lactic acid), 4-hydroxybutanoic acid, 5-hydroxyvaleric acid, or a combination thereof.

The cyclic compound additive including ether groups of the present disclosure can be the crown ether, wherein the crown ether is a molecule using the ethyleneoxy group (-$CH_2CH_2O$-) as the main repeating unit and can include 1,4,7-trioxonane (9-Crown-3), 1,4,7,10-tetraoxacyclododecane (12-Crown-4), 1,4,7,10,13-pentaoxacyclopentadecane (15-Crown-5), 1,4,7,10,13,16-hexaoxacyclooctadecane (18-Crown-6), 1,4,7,10,13,16,19-heptaoxacycloheneicosane (21-Crown-7), 6,7,9,10,17,18,20,21-octahydrodibenzo[b,k][1,4,7,10,13,16]hexaoxacyclooctade cine (dibenzo-18-crown-6), 1,4,10,13-tetraoxa-7,16-diazacyclooctadecane (diaza-18-crown-6), or a combination thereof.

The aromatic compound additive of the present disclosure can include methoxybenzene, 1-ethynyl-4-methoxybenzene, tert-butylbenzene, fluorobenzene, 1,2-difluorobenzene, 1,1'-oxydibenzene, 1,4-diphenylbenzene, 2-fluoro-4-(2-methyl-2-propanyl)aniline, N-[3-(trimethoxysilyl)propyl]aniline, or a combination thereof.

The phosphorus compound additive of the present disclosure can be tris(trimethylsilyl) phosphite (TMSPi), tris(2,2,2-trifluoroethyl) phosphite, triphenyl phosphite, 1,3,5,2,4,6-triazatriphosphorine, (2-ethoxy-2,4,4,6,6-pentafluoro-2,2,4,4,6,6-hexahydro-), or a combination thereof.

The boron compound additive of the present disclosure can be trimethyl borate, tris(trimethylsilyl) borate, 2,4,6-trimethyl-1,3,5,2,4,6-trioxatriborinane, or a combination thereof.

The inorganic oxide additive of the present disclosure can be LiLaZrO, LiLaZrTaO, LiLaTiO, LiPO, LiPOF, LiTiPO, LiAlGeP, LiAlTiPO, LiGePSO, LiSnPSO, PbZrTiO, PbLaZrTiO, BaTiO, or other composite materials. The aforementioned inorganic oxide additive can have various oxidation states, or can be $Al_2O_3$, $TiO_2$, $SiO_2$, $SnO_2$, NiO, ZnO, CaO, MgO, $ZrO_2$, $CeO_2$, $Y_2O_3$, etc., so that it is favorable for reducing the degree of crystallinity of the electrolyte with high molecular weight so as to increase the electrical conductivity of ions and the physical and mechanical properties of the electrolyte. Thus, the cycle life of the battery can be enhanced.

The separator of the present disclosure can be a thin film with porous structure, and the separator can include a single layer or multiple layers of fibers of polyolefins, polyamides, polyesters, such as polyethylene (PE), polypropylene (PP), polyethylene terephthalate (PET), acrylonitrile butadiene styrene copolymer (ABS), epoxy resin, etc. The surface thereof can include an inorganic ceramic composite film of at least one of $Mg(OH)_2$, MgO, $BaSO_4$, $SnO_2$, NiO, CaO, $Al_2O_3$, ZnO, $SiO_2$, $TiO_2$, or a combination thereof. Further, the aforementioned inorganic ceramic composite film can be presented by many different oxidation states.

The current collector of the present disclosure can be a substrate made of a metal foil or a conductive polymer, wherein the metal foil can be selected from aluminum, copper, titanium, nickel, tantalum, stainless steel, or alloys composed of the aforementioned metals.

The cycles of the battery of the present disclosure are defined as that the battery is in a condition of a commercial product, and the first test under the aforementioned condition is taken as the first cycle of the present disclosure. One cycle is defined as completing one discharging test and one charging test, and the number of the cycles is accordingly accumulated.

The electrical capacity of the battery of the present disclosure can be obtained by measuring the charging capacity of the battery and the discharging capacity of the battery. The calculating method for the electrical capacity can be defined as the volumetric capacity (mAh/cm$^3$) and the gravimetric capacity (mAh/g). The volumetric capacity means the electrical capacity provided by the electrode piece per cubic centimeter in a battery, and the volume of the current collector should be deducted as calculating the volumetric capacity. The gravimetric capacity means the electrical capacity provided by the electrode piece per gram in a battery, and the weight of the current collector should be deducted as calculating the gravimetric capacity. The electrode piece can be the cathode piece or the anode piece.

The C-rate (C) of the present disclosure can refer to the current of the battery being fully discharged for one hour, and C can be the unit of the charging and discharging current of the battery.

The measuring voltage range of the battery of the present disclosure can be selected based on the redox potential of the anode material and the cathode material to obtain a relatively proper voltage range. The voltage range can be 0 V to 5.0 V; perfectly, the voltage range can be 0 V to 3.0 V; and more perfectly, the voltage range can be 1.0 V to 4.5 V.

The discharge volumetric capacity of the present disclosure can be represented as CiVj, and the discharge gravimetric capacity can be represented as CiGj, wherein i represents the current for charging and discharging in the unit of C, and j represents the number of cycle of charging and discharging of the battery.

In the Coulombic efficiency of the present disclosure, a total number of Coulombic efficiency satisfying a certain percentage range can be represented as nxCyEz, wherein x represents the lower limit of the certain percentage range, y represents the current for charging and discharging in the unit of C, and z represents the stopped number of cycle of charging and discharging of the battery.

In the Coulombic efficiency of the present disclosure, an average of Coulombic efficiencies can be represented as aCyEz, wherein y represents the current for charging and discharging in the unit of C, and z represents the stopped number of cycle of charging and discharging of the battery.

The battery assembly of the present disclosure can include a battery case, a spring, a spacer, a lid, a tab, or a cap.

The bipolar battery of the present disclosure can include an electrode piece of the bipolar battery and an electrolyte. One side of the electrode piece of the bipolar battery is the cathode including a cathode material, and the other side of the electrode piece of the bipolar battery is the anode including an anode material. The two electrode pieces of the bipolar battery are connected through the electrolyte (the electrolyte contacts the cathode of one bipolar battery electrode piece and the anode of another bipolar battery electrode piece) to form the bipolar battery unit, and a plurality of the bipolar battery units are connected in series to form the bipolar battery.

The battery of the present disclosure can be a primary cell or a secondary cell. The electrochemical carrier of the primary cell or the secondary cell can be at least one of a button type carrier, a winding type carrier or a stacking type carrier. It can be applied to the portable electronic products, such as digital cameras, mobile phones, notebook computers, console handles and other devices which need to be light and thin, or applied to the power storage industries with large-scale, such as light electric vehicles and electric vehicles.

The differential capacity analysis (DCA) of the charging and discharging voltage with a constant current and the electric quantity of the present disclosure can be used to determine the optimal voltage range during the oxidation-reduction of the object. The constant current is set as 2 C for charging or discharging, and the working voltage range for charging and discharging is set as 0.00 V to 5.00 V (vs Li$^+$/Li). The first charging and discharging voltage-electric quantity curve data of the object is taken to perform a linear differential to the voltage, and a graph is drawn with the x-axis as the voltage (V vs Li$^+$/Li) and the y-axis of dQ/dV (mAh/V) so as to obtain a constant current charging and discharging voltage-electric quantity curve differential diagram. The optimal voltage and peak value of the oxidation peak of the object can be observed by the linear differential of the charging curve, and the optimal voltage and peak value of the reduction peak of the object can be observed by the linear differential of the discharging curve. The determining standard of the oxidation peak is described as follows, and the voltage range is set as 0.50 V to 3.00 V (vs Li$^+$/Li). The charging voltage-electric quantity curve data is taken to perform a cubic differential to the voltage so as to obtain a cubic differential data of the charging curve. The voltage corresponding to the peak value smaller than -3 (mAh/V$^3$) set in the cubic differential data of the charging curve is regarded as the oxidation peak voltage. The voltage corresponding to the smallest peak value is set as the first oxidation peak voltage, and the peak value corresponding to the first oxidation peak voltage in the linear differential data of the charging curve is set as the peak value of the first oxidation peak. The voltage corresponding to the second smallest peak value is set as the second oxidation peak voltage, and the peak value corresponding to the second oxidation peak voltage in the linear differential data of the charging curve is set as the peak value of the second oxidation peak. The determining standard of the reduction peak is described as follows, and the voltage range is set as 0.10 V to 3.00 V (vs Li$^+$/Li). The discharging voltage-electric quantity curve data is taken to perform a cubic differential to the voltage so as to obtain a cubic differential data of the discharging curve. The voltage corresponding to the peak value larger than 3 (mAh/V$^3$) set in the cubic differential data of the discharging curve is regarded as the reduction peak voltage. The voltage corresponding to the largest peak value is set as the first reduction peak voltage, and the peak value corresponding to the first reduction peak voltage in the linear differential data of the discharging curve is set as the peak value of the first reduction peak. The voltage corresponding to the second largest is set as the second reduction peak voltage, and the peak value corresponding to the second reduction peak voltage in the linear differential data of the discharging curve is set as the peak value of the second reduction peak.

The electrochemical stability of the present disclosure is measured by the linear sweep voltammetry (LSV). The scanning speed is 0.1 V/s and it is repeatedly tested under the condition of the Li/Li$^+$ relative voltage between -5 V to 5 V, and the results of the corresponding changes in the relationship between current and potential can be obtained.

The observed particle size of the present disclosure is obtained by observing the top view of the composition with an electron microscope. The direction perpendicular to the top view plane is set to divide into the shallow area and the deep area, the particles with a granular or spherical shape in the shallow area are selected as a priority, and the maximum diameter of a single particle is measured. If the shape of the object is irregular shape, the lengths of the longest side and the shortest side are measured and then averaged, and four objects are selected within the measurement range for measurement, and the average of the data from the four objects is used as the average of the observed particle size of the present disclosure, wherein the measurement range area of the component particles can be set to 500 $\mu$m$^2$, and the measurement range area of the dispersed particles can be set to 120 $\mu$m$^2$.

The cumulative particle size of the present disclosure represents the distribution of particle sizes of the particles with various sizes of in the object. The cumulative particle size distribution can be obtained according to the distribution proportion of each particle size and the cumulative percentage based on the volume. For example, the particle size of the distribution proportion of the cumulative particle size reaching 50% is defined as D50, and it can be used to illustrate that 50% of the particles in the object have a particle size smaller than D50. The definitions of D10 and D90 can be known accordingly. Unless otherwise specified, D50 is used as the standard for determining the particle size, and the cumulative particle size of the object can be measured by the laser analyzer or the dynamic light scattering device.

The laser analyzer of the present disclosure can use the Malvern mastersizer 3000+ to measure the particle size lager than the range of the wavelength of the incident light, wherein the diffraction angle of the large particles is small, while the diffraction angle of the small particles is large. By arranging the plural detectors at different angles to collect the light and analyze the scattering phenomenon of micron-sized particles, the particle size can be analyzed.

In the particle size of the present disclosure, the particle size and the particle size distribution thereof can be obtained by measuring the amplitude corresponding to the time of the scattering light from the particles undergoing Brownian motion by dynamic light scattering. The particle size can be calculated by the Stokes-Einstein equation, which is shown as follows:

$$D = kT/(3\pi\eta Df);$$

wherein D is the particle size (the unit is m), k is Boltzmann constant (the unit is J/K), T is the absolute temperature (the unit is K), $\eta$ is the viscosity of the solvent (the unit is kg$\times$m$^{-1}\times$s$^{-1}$), and Df is the diffusion coefficient (the unit is m$^2\times$s$^{-1}$).

In the weight ratio of the anode of the present disclosure, the anode weight calculated here does not include the weight of the current collector.

The material thickness of the anode of the present disclosure can be obtained by measuring the thickness of the anode piece and then deducting the thickness of the current collector.

In the density of the anode material of the present disclosure, a circular anode piece with a diameter of 14 mm is cut, and the weight of the anode piece is measured and then the weight of the current collector is deducted. Then, the thickness of the anode piece and the area of the cutting circle are measured so as to obtain the volume, and the weight is divided by the volume to obtain the density of the anode material.

The electric resistance of the anode material of the present disclosure can be measured by the four-point probes resistance meter. The distance between any two of the probes adjacent thereto is 1.5 cm. During measuring, the probe will contact the surface of the sample, and the closest distance between any probe on the surface and the boundary of the sample should be larger than 7.5 cm.

The roughness of the present disclosure is an arithmetical mean height of the surface of the surface characteristic parameter Sa ($\mu$m) according to ISO 251781. The region for measuring the roughness is set for an area being at least larger than 10000 $\mu$m$^2$. The average height of the surface is the arithmetical mean of the height of each point $Z(x,y)$ in the region. Sa is the average value of the absolute values of the difference between each point $Z(x,y)$ in the region and the average height of the surface according to the following equation:

$$Sa = \frac{1}{A} \iint_A |Z(x,y) - h|dxdy \quad;$$

wherein A ($\mu$m$^2$) is the area of the region, h ($\mu$m) is the average height of the surface.

The conductivity of the present disclosure is measured by the electrochemical impedance spectroscopy (EIS) method, wherein the alternating current with 1 Hz to 100 Hz and the amplitude of 50 mV is applied to the polymer or the electrolyte so as to measure the resistor value. Then, the conductivity is calculated by the following equation:

$$Ci = (1/R) \times (L/A);$$

wherein Ci (S$\times$cm$^{-1}$) is the conductivity, R ($\Omega$) is the resistance value, L (cm) is the distance between two electrodes, and A (cm$^2$) is the sectional area of the sample to be tested and the electrodes, wherein (L/A) can be defined as the conductivity parameter (cm$^{-1}$).

All the arrangements of the component particle and the dispersed particle the present disclosure can be made into the anode compositions according to the related materials or the related ratios, the anodes can be made according to the related materials or the related ratios, and the battery can be made according to the related materials or the related ratios and then performed by the charging and discharging test. The present disclosure only shows some of the relevant arrangements, and that which is without the data or cannot be calculated are marked with "-" in the tables.

According to the above descriptions, the specific embodiments are given below so as to describe the present disclosure in detail.

<Comparative example 1>

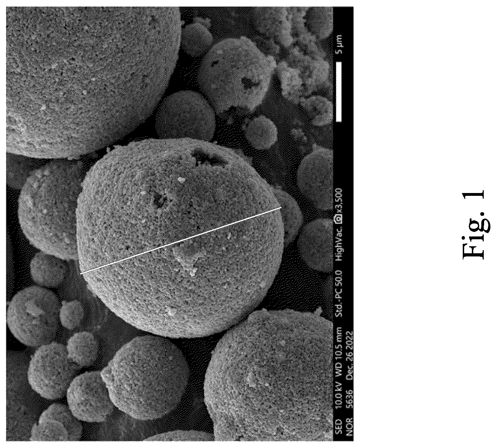

Fig. 1 is a scanning electron microscopy image of a surface of a component particle of a battery according to Comparative example 1. Comparative example 1 provides a battery, and the anode thereof includes an anode material. The anode material includes an anode composition, the anode composition only includes a component particle, and the component particle includes a lithium-titanium complex oxide. The detail data of the battery of Comparative example 1 is shown in Table 1.

| Table 1 | | | | |
|---|---|---|---|---|
| | | | | Comparative example 1 |
| Anode composition | Component particle | Material | | Lithium-titanium complex oxide |
| | | Weight ratio | pWlt | 1.00 |
| | | Observed particle size (μm) | SDlt | SDlt1 | 17.65 |
| | | | | SDlt2 | – |
| | | | | SDlt3 | – |
| | | | | SDlt4 | – |
| | Dispersed | Material | | – |

| | particle | Weight ratio | | pWd | | - |
|---|---|---|---|---|---|---|
| | | Observed particle size (μm) | SDd | SDd1 | | - |
| | | | | SDd2 | | - |
| | | | | SDd3 | | - |
| | | | | SDd4 | | - |
| | | pWd/pWlt | | | | - |
| | | 10×aSDd/aSDlt | | | | - |
| Anode | Anode material | Anode composition | Weight ratio | pWo | | - |
| | | Conductive agent | Weight ratio | pWc | | - |
| | | Adhesive | Weight ratio | pWa | | - |
| | | pWo/pWc | | | | - |
| | | Density (g/cm³) | | DSan | | - |
| | | Thickness (μm) | | THan | | - |
| | | Electric resistance (mΩ) | | Ran | | - |
| | | Oxidation peak | First oxidation peak | Voltage (V) | Vo1 | - |
| | | | | Peak value (mAh/V) | Io1 | - |
| | | | Second oxidation peak | Voltage (V) | Vo2 | - |
| | | | | Peak value (mAh/V) | Io2 | - |
| | | Reduction peak | First reduction peak | Voltage (V) | Vr1 | - |
| | | | | Peak value (mAh/V) | Ir1 | - |
| | | | Second reduction peak | Voltage (V) | Vr2 | - |
| | | | | Peak value (mAh/V) | Ir2 | - |
| | | \|Vo1/Vr1\| | | | | - |
| | | \|Vo1/Vo2\| | | | | - |
| | | \|Vr1/Vr2\| | | | | - |
| | | (Ir1-Ir2)/(Ir1+Ir2) | | | | - |
| Battery | | C1V100/C1V10 | | | | - |
| | | C1V400/C1V10 | | | | - |
| | | C1V800/C1V10 | | | | - |
| | | C4V100/C4V10 | | | | - |
| | | C4V400/C4V10 | | | | - |
| | | C6V100/C1V10 | | | | - |
| | | C4V100/C1V100 | | | | - |
| | | C6V100/C1V100 | | | | - |

<Comparative example 2>

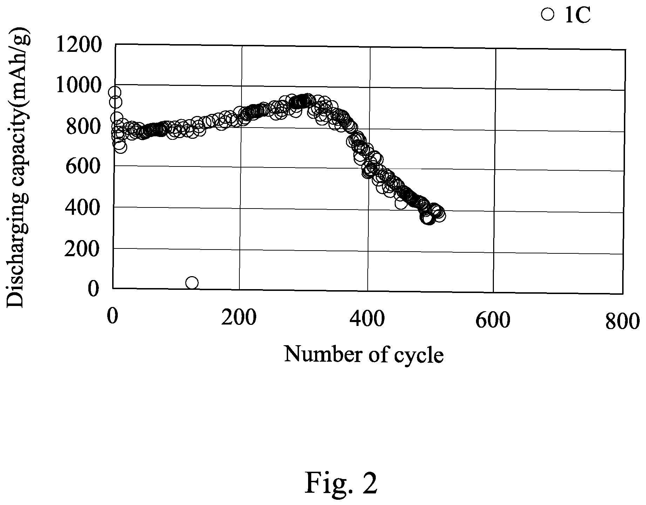

Fig. 2 is a discharge cycle diagram with a current of 1 C of a battery according to Comparative example 2. Comparative example 2 provides a battery, and the anode thereof includes an anode material. The anode material includes an anode composition, the anode composition only includes a dispersed particle, wherein the dispersed particle includes a structural element complex oxide, and the structural element includes a tin and is selected at least two from a group consisting of a magnesium, an aluminum, a silicon, a calcium, a chromium, a manganese, an iron, a cobalt, a nickel, a copper, a zinc, a gallium and a germanium.

The detail data of the battery of Comparative example 2 is shown in Table 2.

| Table 2 | | | | | | Comparative example 2 |
|---|---|---|---|---|---|---|
| Composition | Component particle | Material | | | | - |
| | | Weight ratio | | pWlt | | - |
| | | Observed particle size (µm) | SDlt | SDlt1 | | - |
| | | | | SDlt2 | | - |
| | | | | SDlt3 | | - |
| | | | | SDlt4 | | - |
| | Dispersed particle | Material | | | | Structural element complex oxide |
| | | Weight ratio | | pWd | | 1.00 |
| | | Observed particle size (µm) | SDd | SDd1 | | 0.55 |
| | | | | SDd2 | | 0.47 |
| | | | | SDd3 | | 0.33 |
| | | | | SDd4 | | 0.29 |
| | pWd/pWlt | | | | | - |
| | 10×aSDd/aSDlt | | | | | - |
| Anode | Anode material | Anode composition | Weight ratio | | pWo | - |
| | | Conductive agent | Weight ratio | | pWc | - |

| | | | Adhesive | Weight ratio | | pWa | - |
|---|---|---|---|---|---|---|---|
| | | | | pWo/pWc | | | - |
| | | | Density (g/cm3) | | | DSan | - |
| | | | Thickness (µm) | | | THan | - |
| | | | Electric resistance (mΩ) | | | Ran | - |
| | | Oxidation peak | First oxidation peak | Voltage (V) | | Vo1 | 1.71 |
| | | | | Peak value (mAh/V) | | Io1 | 0.69 |
| | | | Second oxidation peak | Voltage (V) | | Vo2 | 2.00 |
| | | | | Peak value (mAh/V) | | Io2 | 0.65 |
| | | Reduction peak | First reduction peak | Voltage (V) | | Vr1 | 0.89 |
| | | | | Peak value (mAh/V) | | Ir1 | -2.03 |
| | | | Second reduction peak | Voltage (V) | | Vr2 | 1.30 |
| | | | | Peak value (mAh/V) | | Ir2 | -0.40 |
| | | | |Vo1/Vr1| | | | 0.82 |
| | | | |Vo1/Vo2| | | | 0.29 |
| | | | |Vr1/Vr2| | | | 0.41 |
| | | | (Ir1-Ir2)/(Ir1+Ir2) | | | | 0.67 |
| Battery | | | C1V100/C1V10 | | | | 1.10 |
| | | | C1V400/C1V10 | | | | 0.77 |
| | | | C1V800/C1V10 | | | | - |
| | | | C4V100/C4V10 | | | | - |
| | | | C4V400/C4V10 | | | | - |
| | | | C6V100/C1V10 | | | | - |
| | | | C4V100/C1V100 | | | | - |
| | | | C6V100/C1V100 | | | | - |

<Example 1>

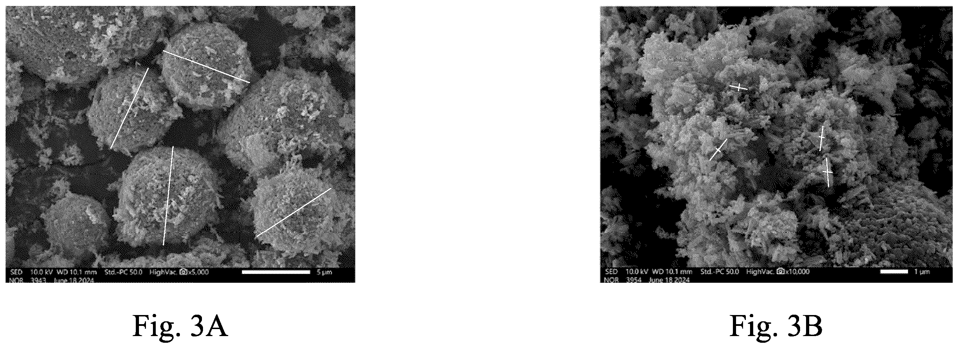

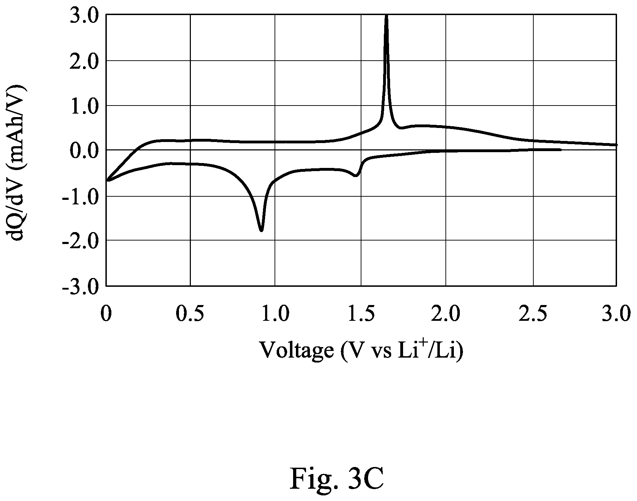

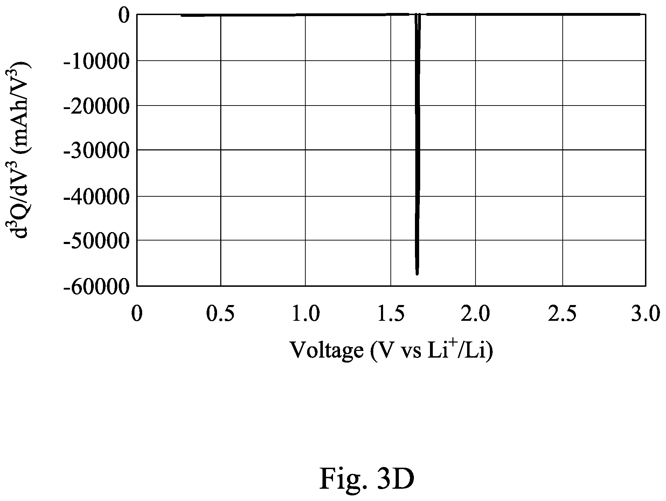

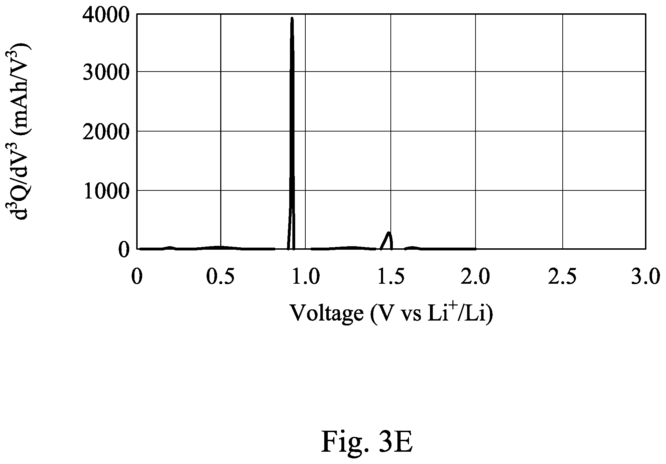

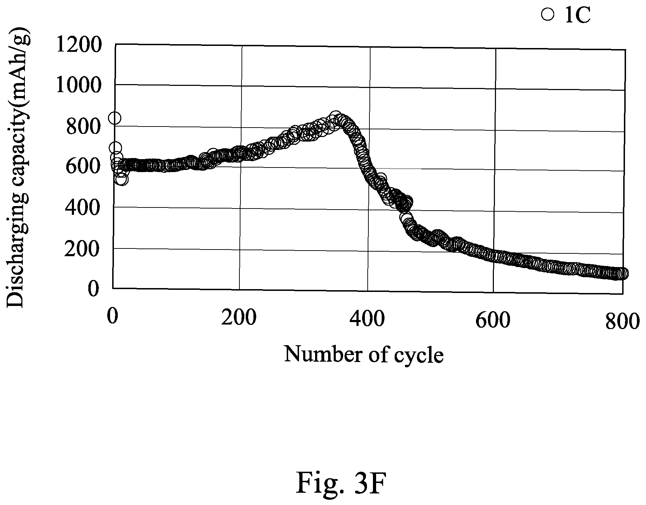

Please refer to Fig. 3A, Fig. 3B, Fig. 3C, Fig. 3D, Fig. 3E, and Fig. 3F, wherein Fig. 3A is a scanning electron microscopy image of a surface of a component particle of a battery according to Example 1, Fig. 3B is a scanning electron microscopy image of a surface of a dispersed particle of the battery according to Example 1, Fig. 3C is a diagram of charging and discharging voltage-electric quantity differential curve with a constant current of a battery according to Example 1, Fig. 3D is a diagram of cubic differential curve of the battery during charging according to Example 1, Fig. 3E is a diagram of cubic differential curve of the battery during discharging according to Example 1, and Fig. 3F is a discharge cycle diagram with a current of 1 C of the battery according to Example 1.

Example 1 provides a battery, and the anode thereof includes an anode material. The anode material includes an anode composition, and the anode composition includes a component particle and a dispersed particle, wherein the component particle includes a lithium-titanium complex oxide, and the dispersed particle includes a structural element complex oxide. The structural element includes a tin and is selected at least two from a group consisting of a magnesium, an aluminum, a silicon, a calcium, a chromium, a manganese, an iron, a cobalt, a nickel, a copper, a zinc, a gallium and a germanium.

The detail data of the battery of Example 1 is shown in Table 3.

| Table 3 | | | | | |
|---|---|---|---|---|---|
| | | | | | Example 1 |
| Anode composition | Component particle | Material | | | Lithium-titanium complex oxide |
| | | Weight ratio | | pWlt | 0.30 |
| | | Observed particle size (µm) | SDlt | SDlt1 | 7.16 |
| | | | | SDlt2 | 6.43 |
| | | | | SDlt3 | 6.33 |
| | | | | SDlt4 | 6.63 |
| | Dispersed particle | Material | | | Structural element complex oxide |
| | | Weight ratio | | pWd | 0.70 |
| | | Observed particle size (µm) | SDd | SDd1 | 0.67 |
| | | | | SDd2 | 0.49 |
| | | | | SDd3 | 0.53 |
| | | | | SDd4 | 0.41 |
| | pWd/pWlt | | | | 2.33 |
| | 10×aSDd/aSDlt | | | | 0.79 |

| | | Anode composition | Weight ratio | pWo | 0.65 |
|---|---|---|---|---|---|
| Anode | Anode material | Conductive agent | Weight ratio | pWc | 0.20 |
| | | Adhesive | Weight ratio | pWa | 0.15 |
| | | pWo/pWc | | | 3.25 |
| | | Density (g/cm³) | | DSan | 1.07 |
| | | Thickness (µm) | | THan | 14.0 |
| | | Electric resistance (mΩ) | | Ran | 1.30 |
| | | Oxidation peak | First oxidation peak | Voltage (V) Vo1 | 1.65 |
| | | | | Peak value (mAh/V) Io1 | 3.26 |
| | | | Second oxidation peak | Voltage (V) Vo2 | 1.83 |
| | | | | Peak value (mAh/V) Io2 | 0.55 |
| | | Reduction peak | First oxidation peak | Voltage (V) Vr1 | 0.92 |
| | | | | Peak value (mAh/V) Ir1 | -1.61 |
| | | | Second oxidation peak | Voltage (V) Vr2 | 1.49 |
| | | | | Peak value (mAh/V) Ir2 | -0.50 |
| | | |Vo1/Vr1| | | | 0.73 |
| | | |Vo1/Vo2| | | | 0.19 |
| | | |Vr1/Vr2| | | | 0.57 |
| | | (Ir1-Ir2)/(Ir1+Ir2) | | | 0.52 |
| Battery | | C1V100/C1V10 | | | 1.12 |
| | | C1V400/C1V10 | | | 0.94 |
| | | C1V800/C1V10 | | | 0.17 |
| | | C4V100/C4V10 | | | - |
| | | C4V400/C4V10 | | | - |
| | | C6V100/C1V10 | | | - |
| | | C4V100/C1V100 | | | - |
| | | C6V100/C1V100 | | | - |

<Example 2>

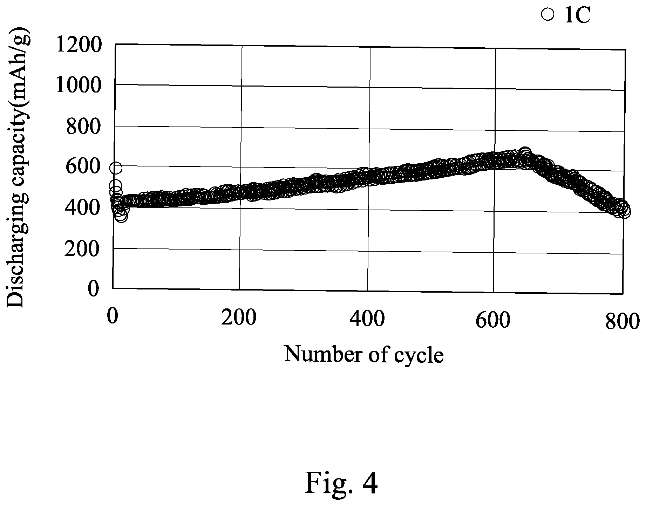

Fig. 4 is a discharge cycle diagram with a current of 1 C of the battery according to Example 2. Example 2 provides a battery, and the anode thereof includes an anode material. The anode material includes an anode composition, and the anode composition includes a component particle and a dispersed particle, wherein the component particle includes a lithium-titanium complex oxide, and the dispersed particle includes a structural element complex oxide. The structural element includes a tin and is selected at least two from a group consisting of a magnesium, an aluminum, a silicon, a calcium, a chromium, a manganese, an iron, a cobalt, a nickel, a copper, a zinc, a gallium and a germanium.

The detail data of the battery of Example 2 is shown in Table 4.

| Table 4 | | | | | |
|---|---|---|---|---|---|
| | | | | | Example 2 |
| Anode composition | Component particle | Material | | | Lithium-titanium complex oxide |
| | | Weight ratio | | pWlt | 0.50 |
| | | Observed particle size (µm) | SDlt | SDlt1 | 6.11 |
| | | | | SDlt2 | 5.33 |
| | | | | SDlt3 | 5.84 |
| | | | | SDlt4 | 5.55 |
| | Dispersed particle | Material | | | Structural element complex oxide |
| | | Weight ratio | | pWd | 0.50 |
| | | Structural element complex oxide | SDd | SDd1 | 0.63 |
| | | | | SDd2 | 0.44 |
| | | | | SDd3 | 0.29 |
| | | | | SDd4 | 0.33 |
| | pWd/pWlt | | | | 1.00 |
| | 10×aSDd/aSDlt | | | | 0.74 |
| Anode | Anode material | Anode composition | Weight ratio | pWo | 0.65 |
| | | Conductive agent | Weight ratio | pWc | 0.20 |
| | | Adhesive | Weight ratio | pWa | 0.15 |
| | | pWo/pWc | | | 3.25 |
| | | Density (g/cm³) | | DSan | 0.98 |
| | | Thickness (µm) | | THan | 14.0 |
| | | Electric resistance (mΩ) | | Ran | 1.24 |
| | | Oxidation peak | First oxidation | Voltage (V) | Vo1 | 1.64 |

| | | | peak | Peak value (mAh/V) | Io1 | 6.88 |
|---|---|---|---|---|---|---|
| | | | Second oxidation peak | Voltage (V) | Vo2 | 1.85 |
| | | | | Peak value (mAh/V) | Io2 | 0.31 |
| | | Reduction peak | First reduction peak | Voltage (V) | Vr1 | 0.89 |
| | | | | Peak value (mAh/V) | Ir1 | -1.05 |
| | | | Second reduction peak | Voltage (V) | Vr2 | 1.48 |
| | | | | Peak value (mAh/V) | Ir2 | -0.44 |
| | | |Vo1/Vr1| | | | 0.75 |
| | | |Vo1/Vo2| | | | 0.20 |
| | | |Vr1/Vr2| | | | 0.59 |
| | | (Ir1-Ir2)/(Ir1+Ir2) | | | | 0.41 |
| Battery | | C1V100/C1V10 | | | | 1.17 |
| | | C1V400/C1V10 | | | | 1.27 |
| | | C1V800/C1V10 | | | | 1.08 |
| | | C4V100/C4V10 | | | | - |
| | | C4V400/C4V10 | | | | - |
| | | C6V100/C1V10 | | | | - |
| | | C4V100/C1V100 | | | | - |
| | | C6V100/C1V100 | | | | - |

<Example 3>

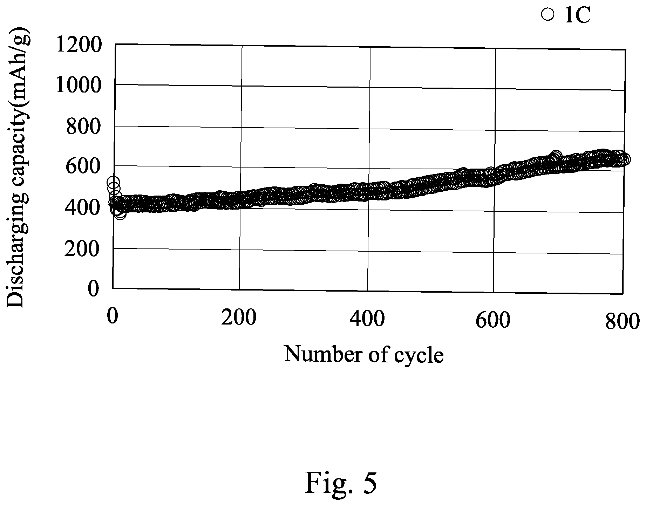

Fig. 5 is a discharge cycle diagram with a current of 1 C of the battery according to Example 3. Example 3 provides a battery, and the anode thereof includes an anode material. The anode material includes an anode composition, and the anode composition includes a component particle and a dispersed particle, wherein the component particle includes a lithium-titanium complex oxide, and the dispersed particle includes a structural element complex oxide. The structural element includes a tin and is selected at least two from a group consisting of a magnesium, an aluminum, a silicon, a calcium, a chromium, a manganese, an iron, a cobalt, a nickel, a copper, a zinc, a gallium and a germanium.

The detail data of the battery of Example 3 is shown in Table 5.

| Table 5 | | | | |
|---|---|---|---|---|
| | | | | Example 3 |
| Anode composition | Component particle | Material | | Lithium-titanium complex oxide |
| | | Weight ratio | pWlt | 0.70 |
| | | Observed particle size (μm) — SDlt | SDlt1 | 9.50 |
| | | | SDlt2 | 7.78 |
| | | | SDlt3 | 7.91 |
| | | | SDlt4 | 6.23 |
| | Dispersed particle | Material | | Structural element complex oxide |
| | | Weight ratio | pWd | 0.30 |
| | | Observed particle size (μm) — SDd | SDd1 | 0.54 |
| | | | SDd2 | 0.34 |
| | | | SDd3 | 0.59 |
| | | | SDd4 | 0.25 |
| | pWd/pWlt | | | 0.43 |
| | 10×aSDd/aSDlt | | | 0.55 |
| Anode | Anode material | Anode composition | Weight ratio | pWo | 0.65 |
| | | Conductive agent | Weight ratio | pWc | 0.20 |
| | | Adhesive | Weight ratio | pWa | 0.15 |
| | | pWo/pWc | | 3.25 |
| | | Density (g/cm³) | DSan | 0.86 |
| | | Thickness (μm) | THan | 14.0 |
| | | Electric resistance (mΩ) | Ran | 1.31 |
| | | Oxidation peak — First oxidation peak | Voltage (V) | Vo1 | 1.63 |
| | | | Peak value (mAh/V) | Io1 | 10.00 |
| | | Oxidation peak — Second oxidation peak | Voltage (V) | Vo2 | 2.00 |
| | | | Peak value (mAh/V) | Io2 | 0.17 |
| | | Reduction peak — First reduction | Voltage (V) | Vr1 | 1.49 |

| | | | |
|---|---|---|---|
| peak | Peak value (mAh/V) | Ir1 | -0.53 |
| Second reduction peak | Voltage (V) | Vr2 | 0.88 |
| | Peak value (mAh/V) | Ir2 | -0.63 |
| \|Vo1/Vr1\| | | | 0.13 |
| \|Vo1/Vo2\| | | | 0.38 |
| \|Vr1/Vr2\| | | | 0.62 |
| (Ir1-Ir2)/(Ir1+Ir2) | | | -0.09 |
| Battery | C1V100/C1V10 | | 1.10 |
| | C1V400/C1V10 | | 1.15 |
| | C1V800/C1V10 | | 1.70 |
| | C4V100/C4V10 | | - |
| | C4V400/C4V10 | | - |
| | C6V100/C1V10 | | - |
| | C4V100/C1V100 | | - |
| | C6V100/C1V100 | | - |

<Example 4>

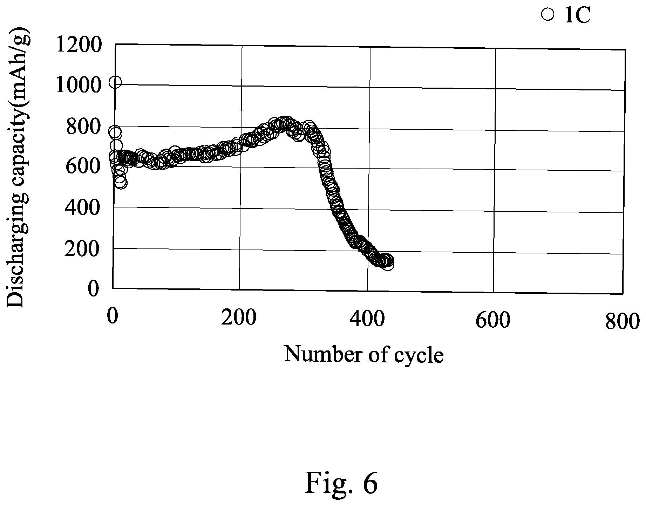

Fig. 6 is a discharge cycle diagram with a current of 1 C of the battery according to Example 4. Example 4 provides a battery, and the anode thereof includes an anode material. The anode material includes an anode composition, and the anode composition includes a component particle and a dispersed particle, wherein the component particle includes a lithium-titanium complex oxide, and the dispersed particle includes a structural element complex oxide. The structural element includes a tin and is selected at least two from a group consisting of a magnesium, an aluminum, a silicon, a calcium, a chromium, a manganese, an iron, a cobalt, a nickel, a copper, a zinc, a gallium and a germanium.

The detail data of the battery of Example 4 is shown in Table 6.

| Table 6 | |
|---|---|
| | Example 4 |

| | | | | | Lithium-titanium complex oxide |
|---|---|---|---|---|---|
| Anode composition | Component particle | Material | | | |
| | | Weight ratio | | pWlt | 0.10 |
| | | Observed particle size (μm) | SDlt | SDlt1 | 8.47 |
| | | | | SDlt2 | 6.55 |
| | | | | SDlt3 | 5.08 |
| | | | | SDlt4 | 5.61 |
| | Dispersed particle | Material | | | Structural element complex oxide |
| | | Weight ratio | | pWd | 0.90 |
| | | Observed particle size (μm) | SDd | SDd1 | 0.67 |
| | | | | SDd2 | 0.42 |
| | | | | SDd3 | 0.36 |
| | | | | SDd4 | 0.37 |
| | pWd/pWlt | | | | 9.00 |
| | 10×aSDd/aSDlt | | | | 0.71 |
| Anode | Anode material | Anode composition | Weight ratio | pWo | 0.65 |
| | | Conductive agent | Weight ratio | pWc | 0.20 |
| | | Adhesive | Weight ratio | pWa | 0.15 |
| | | pWo/pWc | | | 3.25 |
| | | Density (g/cm³) | | DSan | 0.82 |
| | | Thickness (μm) | | THan | 14.0 |
| | | Electric resistance (mΩ) | | Ran | 1.63 |
| | | Oxidation peak | First oxidation peak | Voltage (V) | Vo1 | 1.71 |
| | | | | Peak value (mAh/V) | Io1 | 1.22 |
| | | | Second oxidation peak | Voltage (V) | Vo2 | 1.87 |
| | | | | Peak value (mAh/V) | Io2 | 0.75 |
| | | Reduction peak | First reduction peak | Voltage (V) | Vr1 | 0.89 |
| | | | | Peak value (mAh/V) | Ir1 | -2.13 |
| | | | Second reduction peak | Voltage (V) | Vr2 | 1.42 |
| | | | | Peak value (mAh/V) | Ir2 | -0.41 |
| | | |Vo1/Vr1| | | | 0.82 |
| | | |Vo1/Vo2| | | | 0.15 |
| | | |Vr1/Vr2| | | | 0.52 |
| | | (Ir1-Ir2)/(Ir1+Ir2) | | | | 0.68 |
| | | C1V100/C1V10 | | | | 1.12 |

| C1V400/C1V10 | 0.94 |
|---|---|
| C1V800/C1V10 | - |
| C4V100/C4V10 | - |
| C4V400/C4V10 | - |
| C6V100/C1V10 | - |
| C4V100/C1V100 | - |
| C6V100/c1V100 | - |

<Example 5>

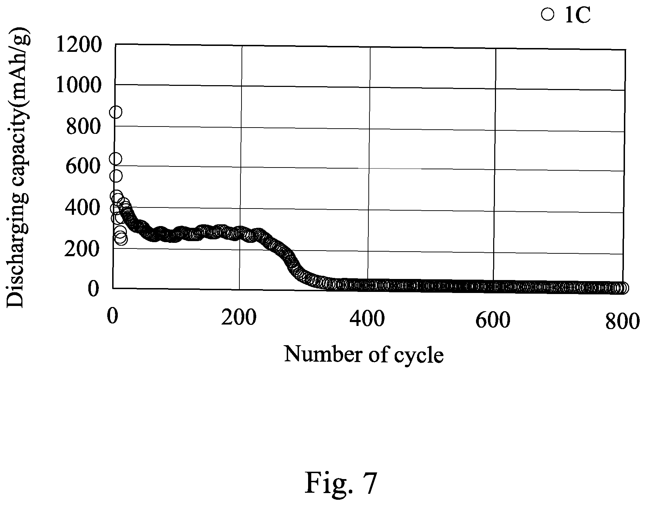

Fig. 7 is a discharge cycle diagram with a current of 1 C of the battery according to Example 5. Example 5 provides a battery, and the anode thereof includes an anode material. The anode material includes an anode composition, and the anode composition includes a component particle and a dispersed particle, wherein the component particle includes a lithium-titanium complex oxide, and the dispersed particle includes a structural element complex oxide. The structural element includes a tin and is selected at least two from a group consisting of a magnesium, an aluminum, a silicon, a calcium, a chromium, a manganese, an iron, a cobalt, a nickel, a copper, a zinc, a gallium and a germanium.

The detail data of the battery of Example 5 is shown in Table 7.

| Table 7 | | | | |
|---|---|---|---|---|
| | | | | Example 5 |
| Anode composition | Component particle | Material | | Lithium-titanium complex oxide |
| | | Weight ratio | pWlt | 0.10 |
| | | Observed particle size (μm) | SDlt | SDlt1 | - |
| | | | | SDlt2 | - |
| | | | | SDlt3 | - |
| | | | | SDlt4 | - |
| | Dispersed particle | Material | | Structural element complex oxide |
| | | Weight ratio | pWd | 0.90 |
| | | Observed particle size (μm) | SDd | SDd1 | - |
| | | | | SDd2 | - |
| | | | | SDd3 | - |

| | | | | | SDd4 | - |
|---|---|---|---|---|---|---|
| | | pWd/pWlt | | | | 9.00 |
| | | 10×aSDd/aSDlt | | | | - |
| Anode | Anode material | Anode composition | Weight ratio | | pWo | 0.65 |
| | | Conductive agent | Weight ratio | | pWc | 0.20 |
| | | Adhesive | Weight ratio | | pWa | 0.15 |
| | | pWo/pWc | | | | 3.25 |
| | | Density (g/cm$^3$) | | | DSan | 1.35 |
| | | Thickness (µm) | | | THan | 21.0 |
| | | Electric resistance (mΩ) | | | Ran | 1.37 |
| | | Oxidation peak | First oxidation peak | Voltage (V) | Vo1 | 1.72 |
| | | | | Peak value (mAh/V) | Io1 | 1.26 |
| | | | Second oxidation peak | Voltage (V) | Vo2 | 1.32 |
| | | | | Peak value (mAh/V) | Io2 | 1.33 |
| | | Reduction peak | First reduction peak | Voltage (V) | Vr1 | 0.45 |
| | | | | Peak value (mAh/V) | Ir1 | -4.38 |
| | | | Second reduction peak | Voltage (V) | Vr2 | 0.47 |
| | | | | Peak value (mAh/V) | Ir2 | -3.88 |
| | | |Vo1/Vr1| | | | 1.27 |
| | | |Vo1/Vo2| | | | 0.40 |
| | | |Vr1/Vr2| | | | 0.02 |
| | | (Ir1-Ir2)/(Ir1+Ir2) | | | | 0.06 |
| Battery | | C1V100/C1V10 | | | | 0.96 |
| | | C1V400/C1V10 | | | | 0.11 |
| | | C1V800/C1V10 | | | | 0.07 |
| | | C4V100/C4V10 | | | | - |
| | | C4V400/C4V10 | | | | - |
| | | C6V100/C1V10 | | | | - |
| | | C4V100/C1V100 | | | | - |
| | | C6V100/c1V100 | | | | - |

<Example 6>

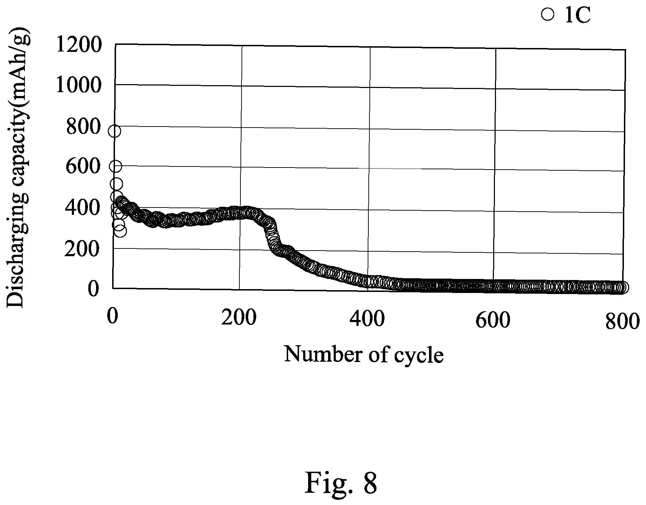

Fig. 8 is a discharge cycle diagram with a current of 1 C of the battery according to Example 6. Example 6 provides a battery, and the anode thereof includes an anode material. The anode material includes an anode composition, and the anode composition includes a component particle and a dispersed particle, wherein the component particle includes a lithium-titanium complex oxide, and the dispersed particle includes a structural element complex oxide. The structural element includes a tin and is selected at least two from a group consisting of a magnesium, an aluminum, a silicon, a calcium, a chromium, a manganese, an iron, a cobalt, a nickel, a copper, a zinc, a gallium and a germanium.

The detail data of the battery of Example 6 is shown in Table 8.

| Table 8 | | | | | Example 6 |
|---|---|---|---|---|---|
| Anode composition | Component particle | Material | | | Lithium-titanium complex oxide |
| | | Weight ratio | | pWlt | 0.30 |
| | | Observed particle size (μm) | SDlt | SDlt1 | - |
| | | | | SDlt2 | - |
| | | | | SDlt3 | - |
| | | | | SDlt4 | - |
| | Dispersed particle | Material | | | Structural element complex oxide |
| | | Weight ratio | | pWd | 0.70 |
| | | Observed particle size (μm) | SDd | SDd1 | - |
| | | | | SDd2 | - |
| | | | | SDd3 | - |
| | | | | SDd4 | - |
| | pWd/pWlt | | | | 2.33 |
| | 10×aSDd/aSDlt | | | | - |
| Anode | Anode material | Anode composition | Weight ratio | pWo | 0.65 |
| | | Conductive agent | Weight ratio | pWc | 0.20 |
| | | Adhesive | Weight ratio | pWa | 0.15 |
| | | pWo/pWc | | | 3.25 |
| | | Density (g/cm$^3$) | | DSan | 1.29 |
| | | Thickness (μm) | | THan | 23.0 |
| | | Electric resistance (mΩ) | | Ran | 1.31 |

| | | | | First oxidation peak | Voltage (V) | Vo1 | 1.658 |
|---|---|---|---|---|---|---|---|
| | | | Oxidation peak | | Peak value (mAh/V) | Io1 | 5.33 |
| | | | | Second oxidation peak | Voltage (V) | Vo2 | 1.661 |
| | | | | | Peak value (mAh/V) | Io2 | 5.52 |
| | | | Reduction peak | First reduction peak | Voltage (V) | Vr1 | 0.44 |
| | | | | | Peak value (mAh/V) | Ir1 | -3.81 |
| | | | | Second reduction peak | Voltage (V) | Vr2 | 0.44 |
| | | | | | Peak value (mAh/V) | Ir2 | -3.81 |
| | | |Vo1/Vr1| | | | | 1.22 |
| | | |Vo1/Vo2| | | | | 0.00 |
| | | |Vr1/Vr2| | | | | 0.01 |
| | | (Ir1-Ir2)/(Ir1+Ir2) | | | | | 0.00 |
| Battery | | C1V100/C1V10 | | | | | 1.06 |
| | | C1V400/C1V10 | | | | | 0.15 |
| | | C1V800/C1V10 | | | | | 0.07 |
| | | C4V100/C4V10 | | | | | - |
| | | C4V400/C4V10 | | | | | - |
| | | C6V100/C1V10 | | | | | - |
| | | C4V100/C1V100 | | | | | - |
| | | C6V100/c1V100 | | | | | - |

<Example 7>

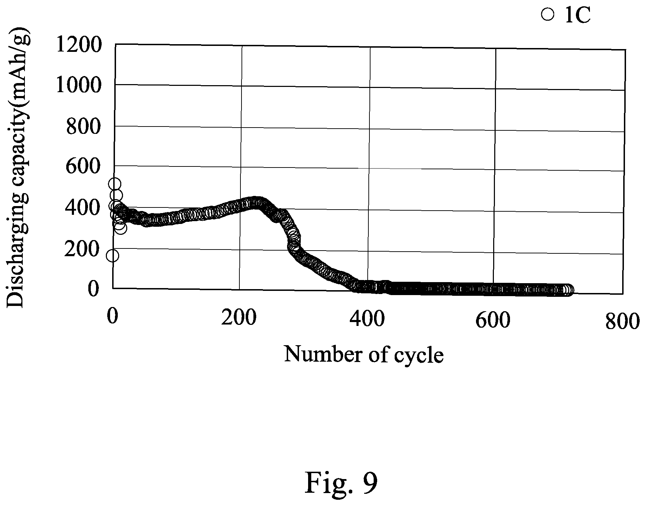

Fig. 9 is a discharge cycle diagram with a current of 1 C of the battery according to Example 7. Example 7 provides a battery, and the anode thereof includes an anode material. The anode material includes an anode composition, and the anode composition includes a component particle and a dispersed particle, wherein the component particle includes a lithium-titanium complex oxide, and the dispersed particle includes a structural element complex oxide. The structural element includes a tin and is selected at least two from a group consisting of a magnesium, an aluminum, a silicon, a calcium, a chromium, a manganese, an iron, a cobalt, a nickel, a copper, a zinc, a gallium and a germanium.

The detail data of the battery of Example 7 is shown in Table 9.

| Table 9 | | | | | |
|---|---|---|---|---|---|
| | | | | | Example 7 |
| Anode composition | Component particle | Material | | | Lithium-titanium complex oxide |
| | | Weight ratio | | pWlt | 0.50 |
| | | Observed particle size (μm) | SDlt | SDlt1 | - |
| | | | | SDlt2 | - |
| | | | | SDlt3 | - |
| | | | | SDlt4 | - |
| | Dispersed particle | Material | | | Structural element complex oxide |
| | | Weight ratio | | pWd | 0.50 |
| | | Observed particle size (μm) | SDd | SDd1 | - |
| | | | | SDd2 | - |
| | | | | SDd3 | - |
| | | | | SDd4 | - |
| | pWd/pWlt | | | | 1.00 |
| | 10×aSDd/aSDlt | | | | - |
| Anode | Anode material | Anode composition | Weight ratio | pWo | 0.65 |
| | | Conductive agent | Weight ratio | pWc | 0.20 |
| | | Adhesive | Weight ratio | pWa | 0.15 |
| | | pWo/pWc | | | 3.25 |
| | | Density (g/cm$^3$) | | DSan | 1.24 |
| | | Thickness (μm) | | THan | 23.0 |
| | | Electric resistance (mΩ) | | Ran | 1.22 |
| | | Oxidation peak | First oxidation peak | Voltage (V) | Vo1 | 1.62 |
| | | | | Peak value (mAh/V) | Io1 | 34.78 |
| | | | Second oxidation peak | Voltage (V) | Vo2 | 1.62 |
| | | | | Peak value (mAh/V) | Io2 | 27.83 |
| | | Reduction peak | First reduction peak | Voltage (V) | Vr1 | 0.45 |
| | | | | Peak value (mAh/V) | Ir1 | -2.90 |

| | | | Second reduction peak | Voltage (V) | Vr2 | 0.46 |
|---|---|---|---|---|---|---|
| | | | | Peak value (mAh/V) | Ir2 | -2.90 |
| | | | \|Vo1/Vr1\| | | | 1.17 |
| | | | \|Vo1/Vo2\| | | | 0.00 |
| | | | \|Vr1/Vr2\| | | | 0.01 |
| | | | (Ir1-Ir2)/(Ir1+Ir2) | | | 0.00 |
| Battery | | | C1V100/C1V10 | | | 1.11 |
| | | | C1V400/C1V10 | | | 0.06 |
| | | | C1V800/C1V10 | | | |
| | | | C4V100/C4V10 | | | - |
| | | | C4V400/C4V10 | | | - |
| | | | C6V100/C1V10 | | | - |
| | | | C4V100/C1V100 | | | - |
| | | | C6V100/c1V100 | | | - |

<Example 8>

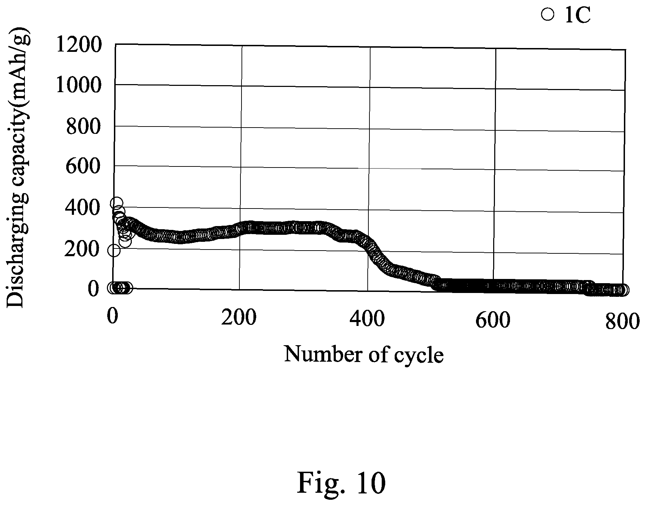

Fig. 10 is a discharge cycle diagram with a current of 1 C of the battery according to Example 8. Example 8 provides a battery, and the anode thereof includes an anode material. The anode material includes an anode composition, and the anode composition includes a component particle and a dispersed particle, wherein the component particle includes a lithium-titanium complex oxide, and the dispersed particle includes a structural element complex oxide. The structural element includes a tin and is selected at least two from a group consisting of a magnesium, an aluminum, a silicon, a calcium, a chromium, a manganese, an iron, a cobalt, a nickel, a copper, a zinc, a gallium and a germanium.

The detail data of the battery of Example 8 is shown in Table 10.

| Table 10 | | | | | | |
|---|---|---|---|---|---|---|
| | | | | | | Example 8 |
| Anode composition | Component particle | Material | | | | Lithium-titanium complex oxide |
| | | Weight ratio | | pWlt | | 0.70 |
| | | Observed particle size | SDlt | SDlt1 | | - |

| | | | | SDlt2 | - |
|---|---|---|---|---|---|
| | | | | SDlt3 | - |
| | | | | SDlt4 | - |
| Dispersed particle | Material | | | | Structural element complex oxide |
| | Weight ratio | | | pWd | 0.30 |
| | Observed particle size (µm) | | SDd | SDd1 | - |
| | | | | SDd2 | - |
| | | | | SDd3 | - |
| | | | | SDd4 | - |
| pWd/pWlt | | | | | 0.43 |
| 10×aSDd/aSDlt | | | | | - |

| Anode | Anode material | Anode composition | Weight ratio | | pWo | 0.65 |
|---|---|---|---|---|---|---|
| | | Conductive agent | Weight ratio | | pWc | 0.20 |
| | | Adhesive | Weight ratio | | pWa | 0.15 |
| | | pWo/pWc | | | | 3.25 |
| | | Density (g/cm$^3$) | | | DSan | 1.08 |
| | | Thickness (µm) | | | THan | 25.0 |
| | | Electric resistance (mΩ) | | | Ran | 1.21 |
| | | Oxidation peak | First oxidation peak | Voltage (V) | Vo1 | 1.60 |
| | | | | Peak value (mAh/V) | Io1 | 32.81 |
| | | | Second oxidation peak | Voltage (V) | Vo2 | 1.60 |
| | | | | Peak value (mAh/V) | Io2 | 98.42 |
| | | Reduction peak | First reduction peak | Voltage (V) | Vr1 | 1.49 |
| | | | | Peak value (mAh/V) | Ir1 | -2.90 |
| | | | Second reduction peak | Voltage (V) | Vr2 | 1.50 |
| | | | | Peak value (mAh/V) | Ir2 | -2.66 |
| | | \|Vo1/Vr1\| | | | | 0.11 |
| | | \|Vo1/Vo2\| | | | | 0.00 |
| | | \|Vr1/Vr2\| | | | | 0.01 |
| | | (Ir1-Ir2)/(Ir1+Ir2) | | | | 0.04 |
| Battery | | C1V100/C1V10 | | | | 0.77 |
| | | C1V400/C1V10 | | | | 0.89 |
| | | C1V800/C1V10 | | | | 0.06 |
| | | C4V100/C4V10 | | | | - |
| | | C4V400/C4V10 | | | | - |

| | | |
|---|---|---|
| C6V100/C1V10 | - |
| C4V100/C1V100 | - |
| C6V100/c1V100 | - |

<Example 9>

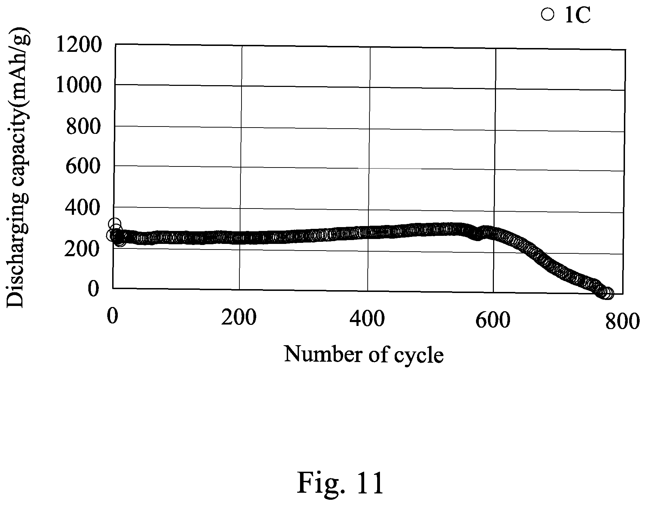

Fig. 11 is a discharge cycle diagram with a current of 1 C of the battery according to Example 9. Example 9 provides a battery, and the anode thereof includes an anode material. The anode material includes an anode composition, and the anode composition includes a component particle and a dispersed particle, wherein the component particle includes a lithium-titanium complex oxide, and the dispersed particle includes a structural element complex oxide. The structural element includes a tin and is selected at least two from a group consisting of a magnesium, an aluminum, a silicon, a calcium, a chromium, a manganese, an iron, a cobalt, a nickel, a copper, a zinc, a gallium and a germanium.

The detail data of the battery of Example 9 is shown in Table 11.

| Table 11 | | | | | |
|---|---|---|---|---|---|
| | | | | | Example 9 |
| Anode composition | Component particle | Material | | | Lithium-titanium complex oxide |
| | | Weight ratio | | pWlt | 0.90 |
| | | Observed particle size (μm) | SDlt | SDlt1 | - |
| | | | | SDlt2 | - |
| | | | | SDlt3 | - |
| | | | | SDlt4 | - |
| | Dispersed particle | Material | | | Structural element complex oxide |
| | | Weight ratio | | pWd | 0.10 |
| | | Observed particle size (μm) | SDd | SDd1 | - |
| | | | | SDd2 | - |
| | | | | SDd3 | - |
| | | | | SDd4 | - |
| | pWd/pWlt | | | | 0.11 |
| | 10×aSDd/aSDlt | | | | - |
| | Anode | Anode | Weight ratio | pWo | 0.65 |

34

| material | composition | | | | |
|---|---|---|---|---|---|
| | Conductive agent | Weight ratio | | pWc | 0.20 |
| | Adhesive | Weight ratio | | pWa | 0.15 |
| | pWo/pWc | | | | 3.25 |
| | Density (g/cm$^3$) | | | DSan | 1.08 |
| | Thickness (µm) | | | THan | 24.0 |
| | Electric resistance (mΩ) | | | Ran | 1.20 |
| | Oxidation peak | First oxidation peak | Voltage (V) | Vo1 | 1.59 |
| | | | Peak value (mAh/V) | Io1 | 70.01 |
| | | Second oxidation peak | Voltage (V) | Vo2 | 1.59 |
| | | | Peak value (mAh/V) | Io2 | -35.00 |
| | Reduction peak | First reduction peak | Voltage (V) | Vr1 | 1.50 |
| | | | Peak value (mAh/V) | Ir1 | -7.78 |
| | | Second reduction peak | Voltage (V) | Vr2 | 1.51 |
| | | | Peak value (mAh/V) | Ir2 | -7.78 |
| | |Vo1/Vr1| | | | 0.09 |
| | |Vo1/Vo2| | | | 0.00 |
| | |Vr1/Vr2| | | | 0.01 |
| | (Ir1-Ir2)/(Ir1+Ir2) | | | | 0.00 |
| Battery | C1V100/C1V10 | | | | 1.09 |
| | C1V400/C1V10 | | | | 1.14 |
| | C1V800/C1V10 | | | | - |
| | C4V100/C4V10 | | | | - |
| | C4V400/C4V10 | | | | - |
| | C6V100/C1V10 | | | | - |
| | C4V100/C1V100 | | | | - |
| | C6V100/c1V100 | | | | - |

**Claims**

1. An anode composition, **characterized in** comprising:

a component particle and a dispersed particle, and the component particle and the dispersed particle being respectively an active material;
wherein the component particle comprises a lithium-titanium complex oxide, and the lithium-titanium complex oxide comprises a lithium element and a titanium element;
wherein the dispersed particle comprises a structural element complex oxide, the structural element complex oxide comprises a structural element, and the structural element comprises a tin and is selected at least two from a group consisting of a magnesium, an aluminum, a silicon, a calcium, a chromium, a manganese, an iron, a cobalt, a nickel, a copper, a zinc, a gallium and a germanium;

wherein a weight ratio of the component particle in the anode composition is pWlt, a weight ratio of the dispersed particle in the anode composition is pWd, and the following condition is satisfied:

$$0.10 \leq pWd/pWlt \leq 3.00.$$

2. The anode composition of claim 1, wherein the weight ratio of the component particle in the anode composition is pWlt, the weight ratio of the dispersed particle in the anode composition is pWd, and the following condition is satisfied:

$$0.30 \leq pWd/pWlt \leq 1.50.$$

3. The anode composition of claims 1 or 2, wherein the weight ratio of the component particle in the anode composition is pWlt, the weight ratio of the dispersed particle in the anode composition is pWd, and the following condition is satisfied:

$$0.35 \leq pWd/pWlt \leq 0.50.$$

4. The anode composition of any one of claims 1 to 3, wherein the structural element comprises the tin and are selected at least two from a group consisting of the aluminum, the silicon, the chromium, the manganese, the iron, the cobalt, the nickel and the copper.

5. The anode composition of any one of claims 1 to 4, wherein the structural element comprises the tin, the iron and is selected at least one from a group consisting of the aluminum, the silicon, the chromium, the manganese, the cobalt, the nickel and the copper.

6. The anode composition of any one of claims 1 to 5, wherein the anode composition comprises at least two oxidation peaks or at least two reduction peaks in a voltage range of 0.10 V to 4.00 V.

7. The anode composition of any one of claims 1 to 6, wherein an average of an observed particle size of the component particle is aSDlt, an average of an observed particle size of the dispersed particle is aSDd, and the following condition is satisfied:

$$0.10 \leq 10 \times aSDd/aSDlt \leq 1.50.$$

8. An anode, **characterized in** comprising:
an anode material comprising the anode composition of any one of claims 1 to 7 and a conductive agent.

9. The anode of claim 8, wherein a weight ratio of the anode composition in the anode material is pWo, a weight ratio of the conductive agent in the anode material is pWc, and the following condition is satisfied:

$$2.80 \leq pWo/pWc \leq 3.80.$$

10. The anode of claims 8 or 9, wherein the anode material comprises at least two oxidation peaks or at least two reduction peaks in a voltage range of 0.20 V to 2.50 V.

11. The anode of claim 10, wherein the anode material comprises at least two reduction peaks in a voltage range of 0.50 V to 1.80 V.

12. The anode of claims 10 or 11, wherein the at least two oxidation peaks in the anode material comprise a first oxidation peak, and a voltage of the first oxidation peak is Vo1, and the following condition is satisfied:

$$1.40 \text{ V} \leq Vo1 \leq 2.00 \text{ V}.$$

13. The anode of any one of claims 8 to 12, wherein the anode material comprises a first oxidation peak and a first reduction peak in a voltage range of 0.20 V to 2.50 V, a voltage of the first oxidation peak is Vo1, a voltage of the first reduction peak is Vr1, and the following condition is satisfied:

$$0.05 \text{ V} \leq |Vo1\text{-}Vr1| \leq 1.50 \text{ V}.$$

14. The anode of any one of claims 10 to 13, wherein the at least two oxidation peaks in the anode material comprise a first oxidation peak and a second oxidation peak, a voltage of the first oxidation peak is Vo1, a voltage of the second oxidation peak is Vo2, and the following condition is satisfied:

$$0.05 \text{ V} \leq |Vo1\text{-}Vo2| \leq 0.60 \text{ V}.$$

15. The anode of any one of claims 8 to 14, wherein a density of the anode material is DSan, and the following condition is satisfied:

$$0.50 \text{ g/cm}^3 \leq DSan \leq 1.80 \text{ g/cm}^3.$$

16. The anode of any one of claims 8 to 15, wherein a thickness of the anode material is THan, an electric resistance of the anode material is Ran, and the following conditions are satisfied:

$$1.0 \text{ μm} \leq THan \leq 70.0 \text{ μm};$$

and

$$0.30 \text{ m}\Omega \leq Ran \leq 10.00 \text{ m}\Omega.$$

17. A battery, **characterized in** comprising:
the anode of claim 8.

18. The battery of claim 17, wherein a discharge volumetric capacity of a tenth cycle of the battery with a current of 1 C for charging and discharging is C1V10, a discharge volumetric capacity of a one-hundredth cycle of the battery with the current of 1 C for charging and discharging is C1V100, and the following condition is satisfied:

$$0.50 \leq C1V100/C1V10 \leq 1.80.$$

19. The battery of claims 17 or 18, wherein a discharge volumetric capacity of a tenth cycle of the battery with a current of 1 C for charging and discharging is C1V10, a discharge volumetric capacity of a four-hundredth cycle of the battery with the current of 1 C for charging and discharging is C1V400, and the following condition is satisfied:

$$0.85 \leq C1V400/C1V10 \leq 2.00.$$

20. The battery of any one of claims 17 to 19, wherein a discharge volumetric capacity of a tenth cycle of the battery with a current of 1 C for charging and discharging is C1V10, a discharge volumetric capacity of an eight-hundredth cycle of the battery with the current of 1 C for charging and discharging is C1V800, and the following condition is satisfied:

$$0.70 \leq C1V800/C1V10 \leq 2.50.$$

21. An anode composition, **characterized in** comprising:

a component particle and a dispersed particle, and the component particle and the dispersed particle being respectively an active material;
wherein the component particle comprises a lithium-titanium complex oxide, and the lithium-titanium complex oxide comprises a lithium element and a titanium element;

wherein the dispersed particle comprises a structural element complex oxide, the structural element complex oxide comprises a structural element, and the structural element comprises a tin and is selected at least two from a group consisting of a magnesium, an aluminum, a silicon, a calcium, a chromium, a manganese, an iron, a cobalt, a nickel, a copper, a zinc, a gallium and a germanium;

wherein an observed particle size of the component particle is SDIt, and the following conditions is satisfied:

$$0.50 \ \mu m \leq SDIt \leq 50.00 \ \mu m.$$

22. The anode composition of claim 21, wherein the structural element comprises a tin and is selected at least two from a group consisting of an aluminum, a silicon, a chromium, a manganese, an iron, a cobalt, a nickel and a copper.

23. The anode composition of claims 21 or 22, wherein the observed particle size of the component particle is SDIt, an observed particle size of the dispersed particle is SDd, and the following conditions are satisfied:

$$1.00 \ \mu m \leq SDIt \leq 30.00 \ \mu m;$$

and

$$0.01 \ \mu m \leq SDd \leq 5.00 \ \mu m.$$

24. The anode composition of any one of claims 21 to 23, wherein an average of the observed particle size of the component particle is aSDIt, an average of the observed particle size of the dispersed particle is aSDd, and the following conditions is satisfied:

$$0.30 \leq 10 \times aSDd/aSDIt \leq 1.20.$$

25. An anode, comprising:
an anode material comprising the anode composition of any one of claims 21 to 24.

26. The anode of claim 25, wherein the anode material comprises at least two oxidation peaks in a voltage range of 1.30 V to 2.50 V, and the anode material comprises at least two reduction peaks in a voltage range of 0.50 V to 1.80 V.

27. The anode of claim 26, wherein the at least two oxidation peaks of the anode material comprise a first oxidation peak and a second oxidation peak, a voltage of the first oxidation peak is Vo1, a voltage of the second oxidation peak is Vo2, and the following conditions is satisfied:

$$0.05 \ V \leq |Vo1-Vo2| \leq 0.60 \ V.$$

28. The anode of claims 26 or 27, wherein the at least two reduction peaks of the anode material comprise a first reduction peak and a second reduction peak, a voltage of the first reduction peak is Vr1, a voltage of the second reduction peak is Vr2, and the following conditions is satisfied:

$$0.20 \ V \leq |Vr1-Vr2| \leq 1.00 \ V.$$

29. The anode of any one of claims 26 to 28, wherein the at least two reduction peaks of the anode material comprise a first reduction peak and a second reduction peak, a peak value of the first reduction peak is Ir1, a peak value of the second reduction peak is Ir2, and the following conditions is satisfied:

$$-1.50 \leq (Ir1-Ir2)/(Ir1+Ir2) \leq 1.50.$$

30. A battery, comprising:
the anode of any one of claims 25 to 29.

Fig. 1

Fig. 2

Fig. 3B

Fig. 3A

41

Fig. 3C

Fig. 3D

Fig. 3E

EP 4 700 844 A1

Fig. 3F

Fig. 4

Fig. 5

Fig. 6

Fig. 7

Fig. 8

Fig. 9

EP 4 700 844 A1

○ 1C

Number of cycle

Discharging capacity(mAh/g)

Fig. 10

Fig. 11

## EUROPEAN SEARCH REPORT

**Application Number**

EP 25 19 6960

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 4 636 839 A2 (LARGAN PRECISION CO LTD [TW]) 22 October 2025 (2025-10-22)<br><br>* paragraph [0073]; claims 1, 2, 7, 9, 13, 14, 16 *<br>----- | 1-6,<br>8-12,<br>15-18,<br>21,22,<br>25,30 | INV.<br>H01M4/131<br>H01M4/36<br>H01M4/38<br>H01M4/48<br>H01M4/485 |
| X | US 9 397 335 B2 (LG CHEMICAL LTD [KR]) 19 July 2016 (2016-07-19)<br><br>* col. 8, l. 3;<br>claims 1, 2 *<br>----- | 1-8,13,<br>14,17,<br>19,20,<br>23,24,<br>26-30 | |
| A | CN 110 291 667 A (LG CHEMICAL LTD) 27 September 2019 (2019-09-27)<br>* claims 1, 6 *<br>----- | 1-30 | |

**TECHNICAL FIELDS SEARCHED (IPC)**

H01M

The present search report has been drawn up for all claims

| Place of search | Date of completion of the search | Examiner |
|---|---|---|
| Munich | 18 January 2026 | Schild, Jérémy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

**EP 4 700 844 A1**

## ANNEX TO THE EUROPEAN SEARCH REPORT
## ON EUROPEAN PATENT APPLICATION NO.

EP 25 19 6960

This annex lists the patent family members relating to the patent documents cited in  the above-mentioned European search report.
The members are as contained in the European Patent Office EDP file on
The European Patent Office is in no way liable for these particulars which are merely given for the purpose of information.

18-01-2026

| Patent document cited in search report | | Publication date | Patent family member(s) | | Publication date |
|---|---|---|---|---|---|
| EP 4636839 | A2 | 22-10-2025 | AU | 2025202145 A1 | 16-10-2025 |
| | | | CA | 3268766 A1 | 29-11-2025 |
| | | | CN | 120727768 A | 30-09-2025 |
| | | | EP | 4636839 A2 | 22-10-2025 |
| | | | JP | 2025156120 A | 14-10-2025 |
| | | | KR | 20250145521 A | 13-10-2025 |
| | | | US | 2025309250 A1 | 02-10-2025 |
| US 9397335 | B2 | 19-07-2016 | EP | 2712009 A1 | 26-03-2014 |
| | | | PL | 2712009 T3 | 31-03-2020 |
| | | | US | 2014027679 A1 | 30-01-2014 |
| | | | WO | 2014010973 A1 | 16-01-2014 |
| CN 110291667 | A | 27-09-2019 | CN | 110291667 A | 27-09-2019 |
| | | | EP | 3567662 A2 | 13-11-2019 |
| | | | JP | 7041806 B2 | 25-03-2022 |
| | | | JP | 2020510281 A | 02-04-2020 |
| | | | KR | 20180104584 A | 21-09-2018 |
| | | | PL | 3567662 T3 | 22-03-2021 |
| | | | US | 2020052294 A1 | 13-02-2020 |
| | | | WO | 2018169290 A2 | 20-09-2018 |

EPO FORM P0459

For more details about this annex : see Official Journal of the European Patent Office, No. 12/82